# EUROPEAN PATENT SPECIFICATION

(11) **EP 2 327 528 B1**
(45) Date of publication and mention of the grant of the patent: **23.10.2013**
(21) Application number: 09382263.3
(22) Date of filing: 30.11.2009
(51) Int. Cl.: B29C 45/14, B29C 51/32, B29C 45/04, B29C 51/08

(54) **Moulding device for preparing surface decorated resin articles and method for preparing such articles**
Formgebungsvorrichtung zur Herstellung oberflächenverzierter Kunststoffartikel und Verfahren zur Herstellung solcher Artikel
Dispositif de moulage pour la préparation d'articles en résine décorés en surface et procédé de préparation de tels articles

(43) Date of publication of application: 01.06.2011
(73) Proprietor: Cie Automotive, S.A., 48011 Bilbao (ES)
(72) Inventor: Azenha, Joao, 3080-234 Figueira da Foz (PT)
(74) Representative: Carpintero Lopez, Francisco

(56) References cited:
- EP-A1- 1 348 534
- FR-A1- 2 329 434

## Description

### TECHNICAL FIELD OF THE INVENTION

The present invention lies within the technical field of providing moulding pieces and, particularly, in the field of In Mould Decoration of moulded pieces.

### BACKGROUND OF THE INVENTION

In Mould Decoration (IMD) is a complex technology of surface printing, forming and injection moulding of a decorated film or foil which becomes an integral part of the final moulded product. The required graphics/symbols are printed on the film or foil prior to forming and moulding operations. The printed film or foil is then formed and trimmed to required shape, introduced into a mould cavity and subjected to a moulding process. The moulding process comprises injecting the resin into the heated mould cavity which contains the printed, formed and trimmed film or foil. When the resin contacts the film or foil, the materials of the film or foil and the resin fuse and an in mould decorated product is obtained. Carrying out conventional IMD processes requires a quite large number of successive steps. This results in that the processes are rather slow and time taking. A conventional IMD moulding device according to the preamble of claim 1 and a method according to the preamble of claim 11 are disclosed in FR-2329434. This IMD device comprises a first mould unit with a female mould part and a moulding wall surrounded by an moulding wall, and a thermoforming male mould unit comprising a thermoforming male mould part with a shaping surface facing said moulding wall, a pattern plate comprising a first surface portion shaped complementarily to said restraining surface, a second surface portion fitting with said moulding wall, an opening, and a core device integrated in the thermoforming male mould part. The IMD moulding device further comprises resin injecting means for injecting a layer of resin between the shaping surface and the moulding wall carrying the decorated foil portion when the moulding device is in a moulding position, such that decorated foil portion becomes fused with the layer of resin and a surface decorated resin article is formed.

### DESCRIPTION OF THE INVENTION

The present invention is intended to overcome the afore mentioned drawbacks of prior art by providing a moulding device for preparing surface decorated resin articles comprising
a first mould unit for making a decorated foil portion from a decorated foil,
a second mould unit for making the surface decorated resin article and comprising an injection male mould unit comprising an injection male mould part having a shaping surface being complementary to a moulding wall of a moulding cavity,
resin injecting means for injecting a layer of resin between the shaping surface and the moulding wall carrying the decorated foil portion when the moulding device is in a moulding position, such that decorated foil portion becomes fused with the layer of resin and a surface decorated resin article is formed,
wherein
the first mould unit is a thermoforming and cutting unit that comprises a female mould part affixed to a female tool holder and comprising a, preferably concave, thermoforming portion surrounded by an moulding wall, and a thermoforming male mould unit comprising a thermoforming male mould part affixed to a first male mould tool holder having a restraining surface facing said moulding wall,
the thermoforming male unit comprises a pattern plate comprising a first surface portion shaped complementarily to said restraining surface, and an opening and a core device integrated in the thermoforming male mould part
the core device comprises at least one shiftable core insert with a, preferably convex, pushing surface that is a part of said restraining surface,
the thermoforming male unit further comprises shifting means for shifting the core insert towards and away from the female mould part between a first position where said pushing surface flushes with said restraining surface and a second position where the pushing surface is pushed towards the thermoforming portion,
the opening in the pattern plate is suitable for passage of at least a portion of the core insert,
the pattern plate is movable between the female mould part and the thermoforming male mould part so that, when the first surface portion is in contact with the restraining surface, when the second surface portion is in contact with said moulding wall and when the core insert is shifted towards the female mould part, the decorated foil is stretched over said pushing surface and a corresponding decorated foil portion is pushed through said opening towards the moulding wall portion and cut out by a peripheral cutting edge portion of said pushing surface, pressed against the thermoforming portion, thermoformed and held thereon; and
the female tool holder is displaceable to place the female mould part alternately in the thermoforming position facing the thermoforming male mould part for making the thermoformed decorated foil portion, and in an alternate position where the female mould part does not face the thermoforming male mould part, such that, when positioned in the thermoforming position, the female mould part and the thermoforming male mould part are positionable from and towards an opened position where the female mould part is distanced from the thermoforming male mould part and a thermoforming position where the female mould part closes against the thermoforming male mould part.

In a first embodiment of the moulding device, the alternate position is a resting position in which the female mould part carrying the thermoformed decorated foil portion faces the injection male mould part for making the surface decorated resin article, the female mould part comprises the moulding cavity with the moulding wall, the second surface portion of the pattern plate is shaped complementarily to the moulding wall, and the thermoforming portion is a moulding wall portion of the moulding wall. The female mould part and the injection male mould part are positionable from and towards a resting position where the injection male mould part is distanced from the female mould part and a moulding position where the shaping surface is close to the moulding wall whilst the second surface portion of the pattern plate is shaped complementarily to the moulding wall such that the second surface portion fits with the moulding wall.

In the first embodiment of the moulding device, the female tool holder may be linearly displaceable by displacing means from the thermoforming male mould unit to the injection male mould unit along a guiding carrier plate facing the male mould units.

Alternatively, in the first embodiment of the moulding device, the female mould part may comprise a first female mould part and a second female mould part affixed to the female tool holder such that, when the first female mould part is positioned by the displacing means to face the first male mould unit, the second female mould part becomes positioned facing the second male mould unit, and in that the female tool holder is rotary by the displacing means about a horizontal axis along an angle of 180º. To achieve rotation, the female tool holder may be connected to a rotary carrier plate or may be rotably connected to a stationary carrier plate.

In another alternative, in said first embodiment the first male mould unit may be affixed to a first male mould tool holder and the second male mould unit may be affixed to a second male mould tool holder. The female mould tool holder is located between a the first and the second male mould unit, and the female mould part comprises at least one side portion comprising at least one moulding cavity, and is revolvingly positioned in an opening in the female mould tool holder such that it can revolve about a vertical axis so that when the female mould part revolves, the side portion alternately is positioned to face the first male mould unit and the second male mould unit. In this alternative, the female mould part comprises a plurality of side portions each comprising at least one moulding cavity so that when the female mould part revolves, each said side portion is positioned alternately to face the first male mould unit or the second male mould unit.

In a second embodiment of the moulding device, it comprises a separate injection female mould part comprising the moulding cavity with the moulding wall. The separate injection female mould part is comprised in the second mould unit for making the surface decorated resin article, and the female mould part is a thermoforming female mould part. In this case, the alternate position to which the female mould part can be brought by, for example, a rotary female tool holder, is an extracting position in which the thermoformed decorated foil portion is extracted from the injection female mould part by extracting and positioning means which are designed to position the decorated foil portion extracted from the thermoforming female mould part onto a part of the moulding wall of the separate injection female mould part where it faces the injection male mould part for making the surface decorated resin article.

The invention also refers to a method for preparing surface decorated resin articles comprising
making a decorated foil portion from a decorated foil in a first mould unit,
making the surface decorated resin article in a second mould unit comprising an injection male mould unit comprising an injection male mould part having a shaping surface being complementary to a moulding wall of a moulding cavity,
injecting a layer of resin by using resin injecting means between the shaping surface and the moulding wall carrying the decorated foil portion when the second mould unit is in a moulding position, such that decorated foil portion becomes fused with the layer of resin and a surface decorated resin article is formed,
extracting the surface decorated resin article from the moulding device, wherein
the decorated foil portion is cut and thermoformed in the first mould unit which is a thermoforming and cutting unit, by
placing the decorated foil between a restraining surface of a thermoforming male mould unit and a pattern plate positioned between a thermoforming portion of a female mould part and the thermoforming male mould unit,
the female mould part being affixed to a female tool holder and comprising an inner surface surrounding the thermoforming portion and facing the restraining surface,
the thermoforming male mould unit comprising a thermoforming male mould part affixed to a first male mould tool holder, and a core device integrated in the thermoforming male mould part, and the pattern plate comprising a first surface portion shaped complementarily to said restraining surface, a second surface portion fitting within said moulding wall and an opening;
and wherein the method further comprises the steps of
closing the first mould unit such that the decorated foil becomes immobilized between the restraining surface and the first surface portion of the pattern plate which is movable between said female mould part and said thermoforming male mould part, and the pattern plate becomes held between the restraining surface and said moulding wall of the female mould part;
shifting, by using shifting means, a shiftable core insert which has a pushing surface that is part of said restraining surface of the core device, from a first position a first position where said pushing surface flushes with said restraining surface, through said opening which is suitable for passage of at least a portion of said core insert, towards the female mould part, to second position where the pushing surface protrudes from the restraining surface and is pressed towards the thermoforming portion of said moulding wall, whereby the decorated foil becomes stretched over the pushing surface and is pulled through said opening, such that the decorated foil portion is cut out by a peripheral cutting edge of the core insert and pressed by the pushing surface against the thermoforming portion of the moulding wall, thermoformed and held thereon;
subjecting the decorated foil portion to thermoforming;
moving the core insert back to the first position such that the thermoformed decorated foil portion remains held on the thermoforming portion;
opening the first mould unit such that the female mould part becomes distanced from the thermoforming male mould part;
displacing the female tool holder by displacing means such that the female mould part becomes placed into an alternate position where the female mould part does not face the thermoforming male mould part.

In a first embodiment of this method, the alternate position is a resting position in which the female mould part carrying the thermoformed decorated foil portion faces the injection male mould part for making the surface decorated resin article in the second mould unit. The female mould part comprises the moulding cavity with the moulding wall, as well as a moulding wall portion that is the thermoforming portion, and
second surface portion of the pattern plate is shaped complementarily to the moulding wall such that this second surface portion fits with the moulding wall. According to this first embodiment, after the female mould part carrying the thermoformed decorated foil portion has been brought to face the injection male mould part, the second mould unit is brought to the moulding position in which a layer of resin is injected between the shaping surface and the moulding wall carrying the thermoformed decorated foil portion.

In a first alternative of the first embodiment of the method, the female mould part is brought to the resting position by means of a female tool holder that is linearly displaceable from the thermoforming male mould unit to the injection male mould unit along a guiding carrier plate facing the male mould units.

Ina second alternative of the first embodiment of the method, a first female mould part and a second female part are used, the female mould parts being affixed side-by-side to a female tool holder that is rotary along an angle of 180°. The female tool holder is rotated in such a manner that, when the first female mould part is positioned to face the thermoforming male mould unit, the second female mould part becomes positioned facing the injection male mould unit.

In a third alternative of the first embodiment of the method, the female mould tool holder is located between a the thermoforming male mould unit and the injection male mould unit, and a female mould part comprising at least one side portion comprising at least one moulding cavity and positioned in an opening in the female mould tool holder such that it can revolve about a vertical axis, is made to revolve so that said side portion becomes alternately positioned to face the thermoforming male mould unit or the injection male mould unit. In this third alternative, the female mould part may comprise a plurality of side portions each comprising at least one moulding cavity so that when the female mould part revolves, each said side portion becomes positioned alternately to face the thermoforming male mould unit and the injection male mould unit.

In a second embodiment of the method, from the second position is an extracting position, in which the thermoformed decorated foil portion is extracted by extracting and positioning means from the female mould part which is a thermoforming female mould part, the extracted thermoformed decorated foil portion is transferred to the second mould unit comprising a separate injection female mould part comprising the moulding cavity with the moulding wall and the injection male mould part, when the second mould unit is in a resting position where the injection female mould part is distanced from the injection male mould part, such that the thermoformed decorated foil portion is placed onto a part of the moulding wall. The second mould unit is then brought to the moulding position in which a layer of resin is injected between the shaping surface and the moulding wall carrying the thermoformed decorated foil portion. The thermoformed decorated foil portion may be brought into the extracting position by rotating the thermoforming female mould part.

The moulding device further comprises *per* se conventional heating means for heating the foil as well as means for applying a vacuum and/or high-pressure air for thermoforming the foil. The difference in performance between vacuum and high pressure air is the side where it is applied i.e. high-pressure air is applied to the opposite side of vacuum. A combination of vacuum and high-pressure air can also be used.

As apparent, compared with conventional IMD processes, the present invention allows manufacturing surface decorated resin articles in one single step or, at least, in fewer steps and in less time between steps.

### BRIEF DESCRIPTION OF THE DRAWINGS

Hereinafter, aspects and embodiments of the invention will be described on the grounds of drawings wherein
figure 1 is schematic sectional view of a moulding device pursuant to a first embodiment of the invention in a position corresponding to the use thereof in a first step of a process for cutting and thermoforming decorated foil portions;
figure 2 is schematic sectional view of the moulding device of figure 1 in a position corresponding to a second step of said process;
figure 3 is schematic sectional view of the moulding device of figure 1 in a position corresponding to a third step of said process;
figure 3a is an enlarged view of the portion marked "A" in figure 3;
figure 4 is schematic sectional view of the moulding device of figure 1 in a position corresponding to a fourth step of said process;
figure 5 is schematic sectional view of the moulding device of figure 1 in a position corresponding to a fifth step of said process;
figure 6 is schematic sectional view of the moulding device of figure 1 in a position corresponding to a sixth step of said process;
figure 7 is schematic sectional view of the moulding device of figure 1 in a position corresponding to the use thereof in a first stage of a method for producing surface decorated resin articles;
figure 8 is schematic sectional view of the moulding device of figure 1 in a position corresponding to the use thereof in a second stage of said method;
figure 9 is schematic sectional view of the moulding device of figure 1 in a position corresponding to the use thereof in a third stage of said method;
figure 10 is schematic perspective side view of a second embodiment of a moulding device pursuant to the present invention in a first position;
figure 11 is a schematic perspective side view of the moulding device of figure 10 in a second position;
figure 12 is schematic perspective side view of a third embodiment of a moulding device pursuant to the present invention in a first position;
figure 13 is a schematic perspective side view of the moulding device of figure 12 in a second position;
figures 14A—14C are schematic perspective views of a third embodiment of a moulding device pursuant to the present invention;
figure 15 is schematic perspective side view of a fourth embodiment of a moulding device pursuant to the present invention in a first position;
figure 16 is a schematic perspective side view of the moulding device of figure 15 in a second position;
figure 17 is schematic perspective side view of a fifth embodiment of a moulding device pursuant to the present invention in a first position;
figure 18 is a schematic perspective side view of the moulding device of figure 17 in a second position.

In these figures, there are references identifying the following elements
- 1, 1': female mould part
- 1 a: moulding cavity
- 1 b: moulding wall
- 1 c: moulding wall portion (thermoforming portion)
- 2: thermoforming male mould part
- 2a: restraining surface
- 2b: thermoforming male mould unit
- 2c: injection male mould unit
- 3: pattern plate
- 3a: first surface portion
- 3b: second surface portion
- 3c: opening for passage of core insert
- 4: core insert
- 4a: pushing surface
- 4b: cutting edge portion
- 5: core device
- 6: decorated foil
- 6a: decorated foil portion
- 7: first male mould tool holder
- 8: carrier plate
- 9: shifting means
- 10: guiding carrier plate
- 11: female mould tool holder
- 12: resin layer
- 13: second male mould tool holder, injection side
- 14: middle female mould tool holder
- 14a: central opening
- 15: first male mould tool holder, ejection side
- 16: revolving female mould part
- 17: surface decorated resin article
- 18: injection male mould part
- 18a: shaping surface
- 19: fixed insert
- 19a: shaping surface section
- 20: rotary carrier plate
- 21: stationary carrier plate
- 22: injection female mould part
- 23: thermoforming female mould part
- 24: thermoforming female mould part holder
- 25: extracting and positioning means
- 25a: suction cup
- 26: resin injection means
- 27: foil carrying device

### EMBODIMENTSOF THE INVENTION

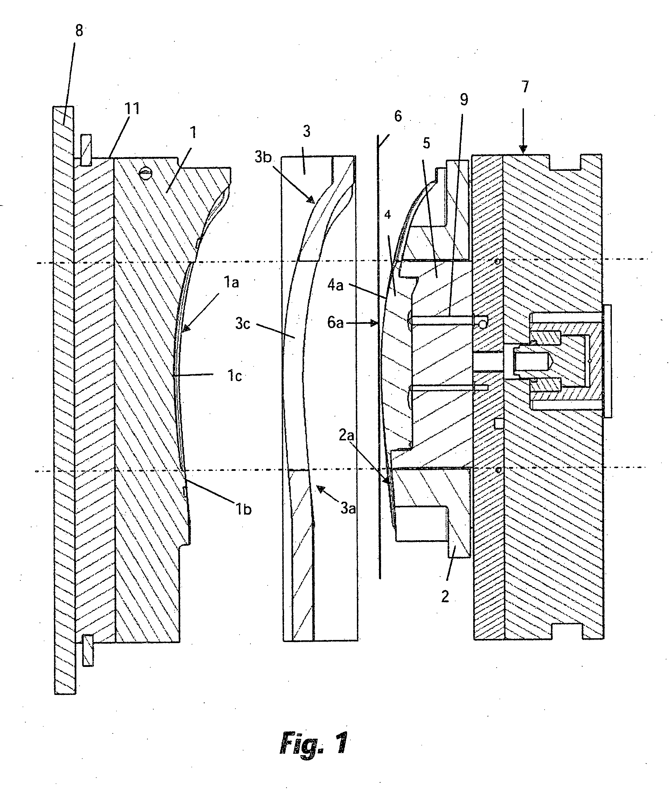

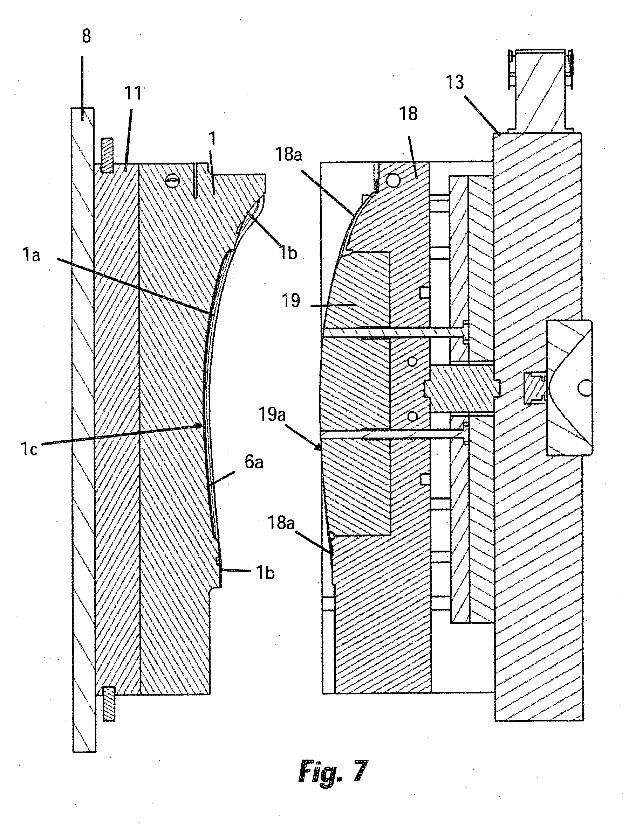

Figures 1-6 show an embodiment of the moulding device according to the present invention comprising a female mould part -1- mounted on a female mould tool holder -11- and, a thermoforming; male mould part -2- mounted on a stationary male mould tool holder -7-, as used to cut and thermoform a decorated foil portion -6a- out of a decorated foil -6-. A typical foil -6- as used has a thickness of 0.5 mm although different thicknesses as, for example, 0.3 to 0.7 mm can be used. Figures 7-9 show how, after the decorated foil portion -6a- has been cut and thermoformed, the female mould part -1- shown in figures 1-6 is used together with an injection male mould part -18- to manufacture a final resin article -17- comprising the thermoformed decorated foil portion -6a- fused with a resin layer -12-.

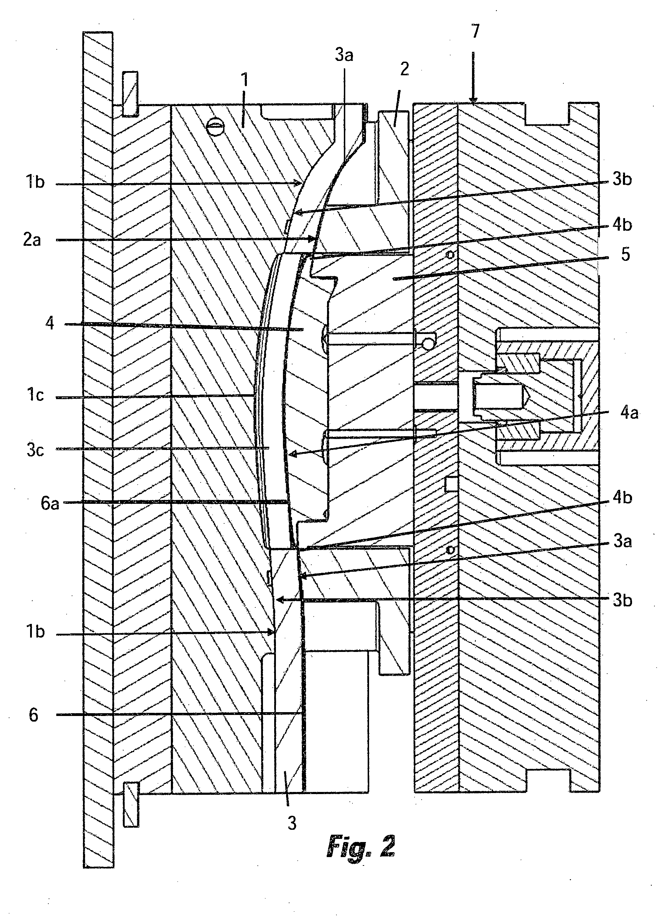

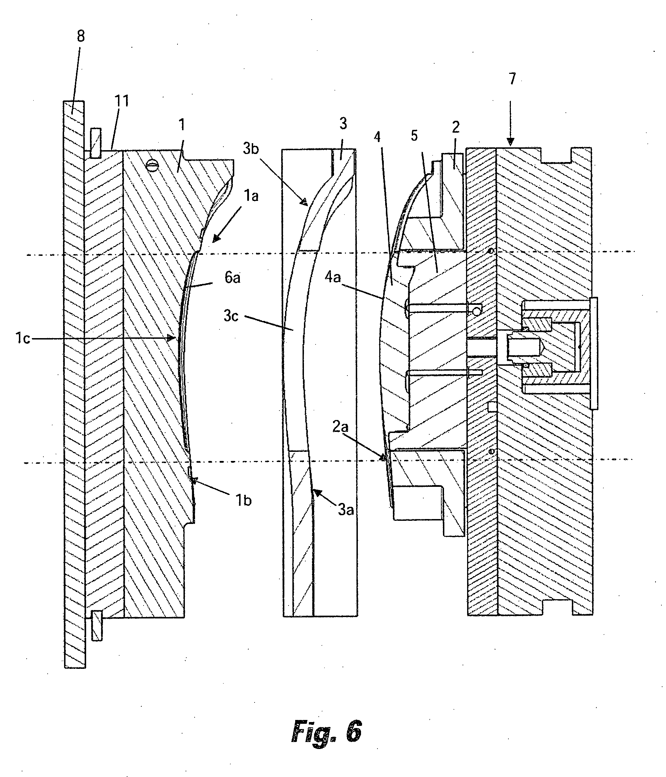

As shown, the female mould part -1- is mounted on a female tool holder -11-and ccomprises a moulding cavity -1 a- with a moulding wall -1 b-. The female mould tool holder -7- is fixed to a carrier plate -8- that is connected to moving means (not shown in figures 1-6) for moving the female mould part -2- towards and away from the male mould part -2- between a resting position (shown in figures 1 and 6) where the thermoforming male mould part -2- is distanced from the female mould part -1-and a thermoforming position (shown in figure 2-5) where the restraining surface -2a- of the thermoforming male mould part -2- is closest to the female mould part's moulding wall -1 b-.

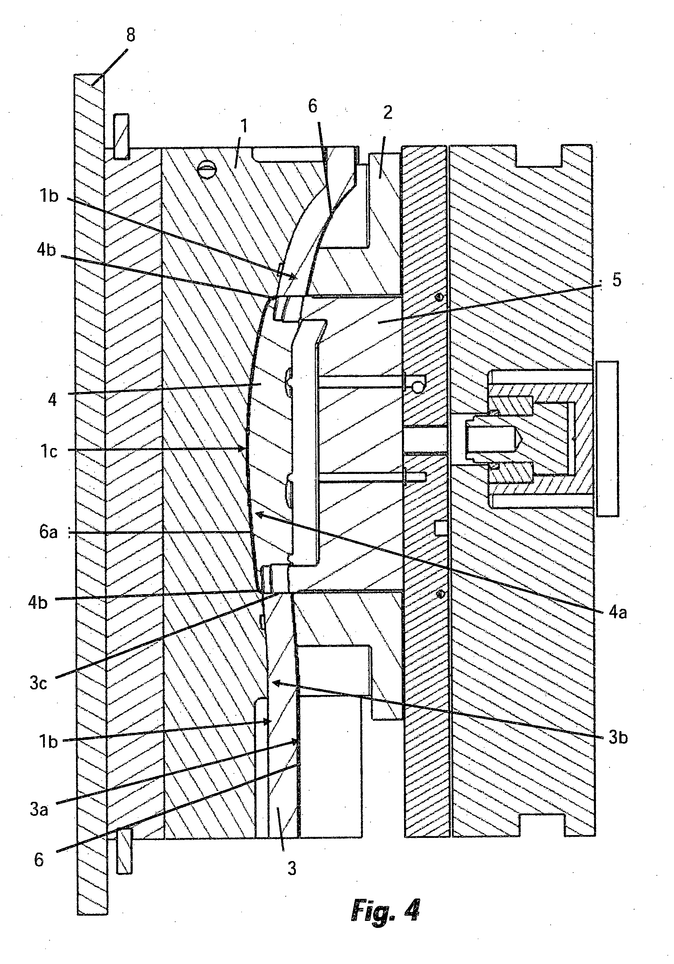

A core device -5- is integrated in the front portion of the male mould part -2-and comprises a shiftable core insert -4- with an outer pushing surface -4a-. Shifting means -9- are provided for shifting the core insert -4- towards and away from the female mould part -1- between a first position (shown in figures 1 and 6) where said pushing surface -4a- flushes with the restraining surface -2a- and a second position (shown in figure 4) where the pushing surface -4a- is pressed towards a thermoforming portion which is moulding wall portion -1 c- of the moulding wall -1 b-of the moulding cavity -1a-.

The moulding device may further comprise *per* se conventional heating means for heating the foil -6- as well as means for applying a vacuum and/or high-pressure air for thermoforming the foil.

Figures 1 ― also show a pattern plate -3- placed between the female mould part -1- and the thermoforming male mould part -2-. The pattern plate -3- comprises a first surface portion -3a- that has a shape which is complementary to the thermoforming male mould part's restraining surface -2a-, a second surface portion -3b- that has a shape that is complementary to the female mould part's moulding wall -1 b- and an opening -3c- dimensioned such that the pushing surface -4a- of the core insert -4- can pass there through. Thus, when the first surface portion -3a- is in contact with said restraining surface -2a- and when the second surface portion -3bis in contact with the female mould part's moulding wall -1 b- the foil -6- is fixed between the restraining surface -2a- and the pattern plate's first surface portion -3a-. When the core insert -4- is then shifted towards the moulding cavity -1a-, a corresponding portion -6a- of the decorated foil -6- is pushed towards said moulding wall portion -1 c- of the moulding wall -1 b- through the opening -3a- by the core insert's pushing surface -4a-, and thereby becomes first tensioned and thus wrapped over the pushing surface and then cut out of the foil -6- by a peripheral cutting edge -4b- of the core insert -4-. Thereafter, the cut-out foil portion -6a-becomes pressed and thermoformed against the moulding wall portion -1 c- and held thereby when the core insert -4- retreats to its first position.

As shown in figure 6-9, the thermoformed decorated foil portion -6a- remains held on the female mould part's moulding wall portion -1 c- when the female mould part -1- described with reference to figures 1-6 is used together with an injection male mould part -18- to manufacture the final decorated resin article -17- comprising the thermoformed decorated foil portion -6a- fused with a resin layer -12-.

The injection male mould part -18- comprises a shaping surface -18a- that is shaped complementarily to the female mould part's moulding cavity -1a-. A fixed insert -19- having a shaping surface section -19a- is integrated within the injection male mould part -18-. The shaping surface section -19a- is a part of the injection male mould part's shaping surface -18a- and is dimensioned such that it covers the surface of the thermoformed decorated foil portion -6a- placed in the moulding cavity -1a- of the female mould part -1-.

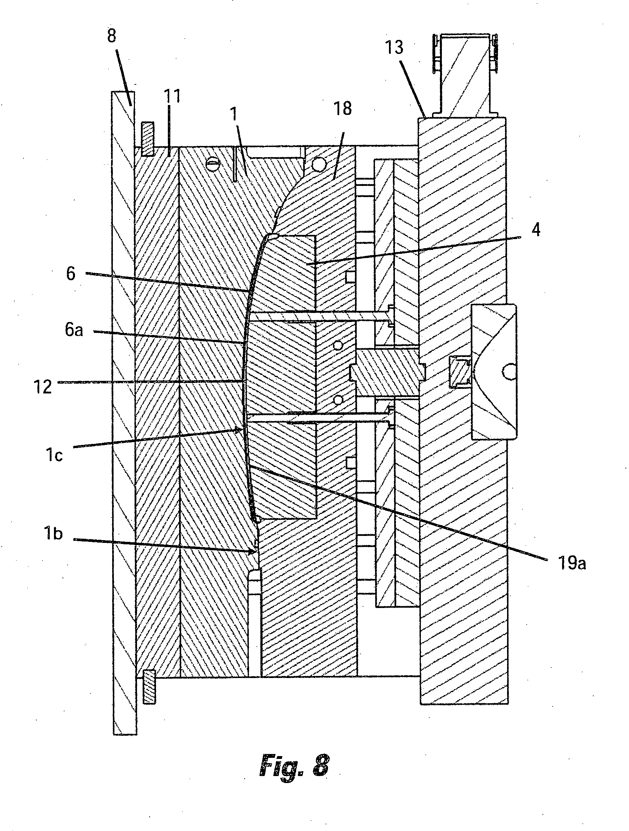

The injection male mould part -18- is further connected to *per* se conventional resin injection means (not shown in figures 6-9) through which, very shortly before the injection male mould part -2- is in the moulding position shown in figure 8, resin -12-can be injected into the moulding cavity -1a- between the shaping surface -18a-comprising the shaping surface section -19a- and the moulding wall -1 b- with the there-placed thermoformed decorated foil portion -6a- such that the thermoformed decorated foil portion -6a- becomes fused with the resin -12- and the surface decorated resin article -17- is formed.

In operation, the moulding device works as follows:
In a first step, the foil is heated outside or inside the moulding device. In this latter case, the moulding device also comprises *per* se conventional heating means (not shown in the drawings). If the foil -6- has been heated outside the mould, it is moved and placed between the pattern plate -3- and the thermoforming male mould part -2-. On the other hand, if the foil -6- is to be heated inside the mould it is placed between the pattern plate -3- and the male mould part -2- and then heated.

Once the heated foil -6- has been placed between the pattern plate -3- (cf. figure 1) and a vacuum has been applied so as to make the foil become attached to the thermoforming male mould part's restraining surface -2a-, the first surface portion -3a- of the pattern plate -3- is closed against the restraining surface -2a- of the male mould part and the second surface portion -3b- thereof contacts the female mould part's moulding wall -1b-. Thereby, the foil -6- becomes fixed between the restraining surface -2a- of the male mould part -2- and the pattern plate's first surface portion -3a-.

Thereafter, the shifting means shift the core insert -4- and, thereby, the pushing surface -4a- towards the moulding wall portion -1 c- of the female mould part's moulding wall -1 b- so that the core insert's pushing surface -4a- starts to protrude out of the shaping surface -2a- and to pass into the opening -3c- of the pattern plate -3- (cf. figure 2), such that the foil's decorated foil portion -6a- is dragged by the core insert's cutting edge portions -4b- towards the moulding wall portion -1c-. As the remaining portion of the foil -6- remains retained between the pattern plate's first surface portion -3a- and the thermoforming male mould part's restraining surface -2a- and as the core insert's outer edges are very close to the edges of the pattern plate's opening -3a-, this movement of the insert -4- stretches the decorated foil portion -6a- and causes it to become wrapped closely onto the pushing surface -4a-.

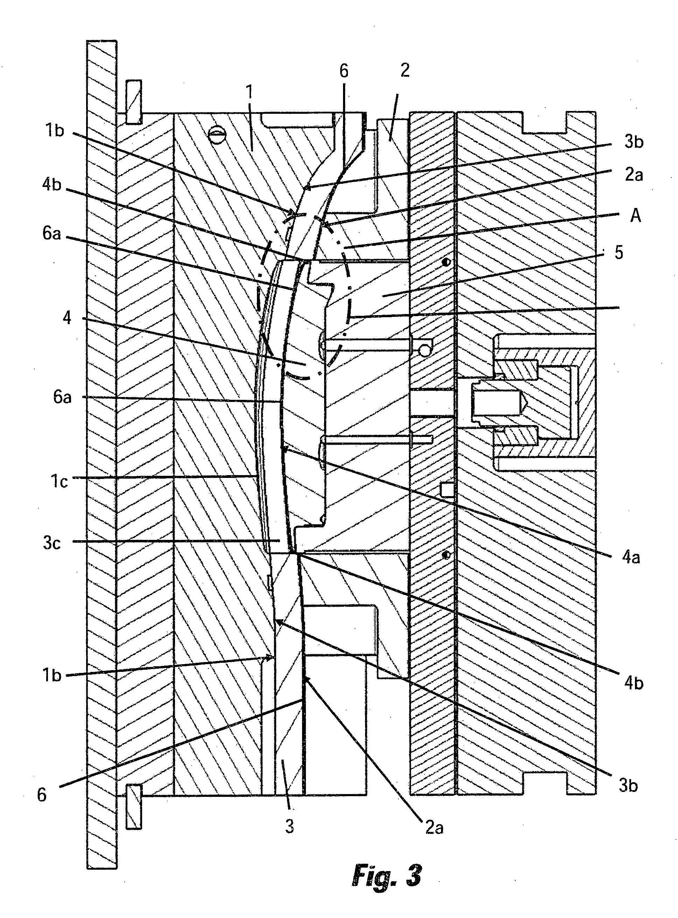

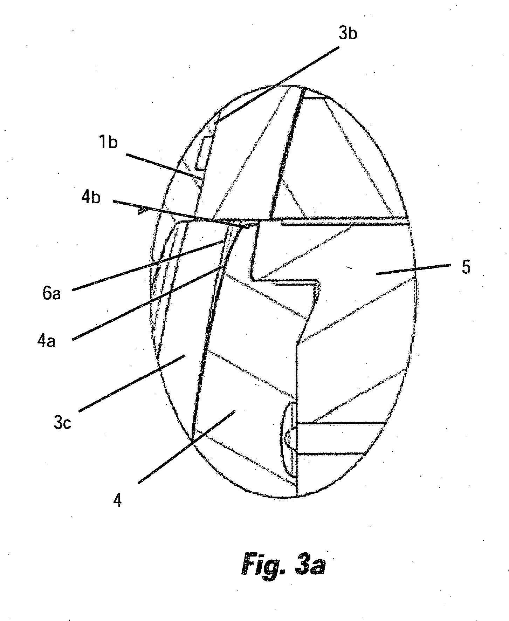

As the insert -4- further advances through opening -3c- towards moulding wall portion -1c- (cf. figure 3), the decorated foil portion -6a- is cut out of foil -6- by the cutting edges -4b- and remains attached to the core insert's pushing surface -4a-.

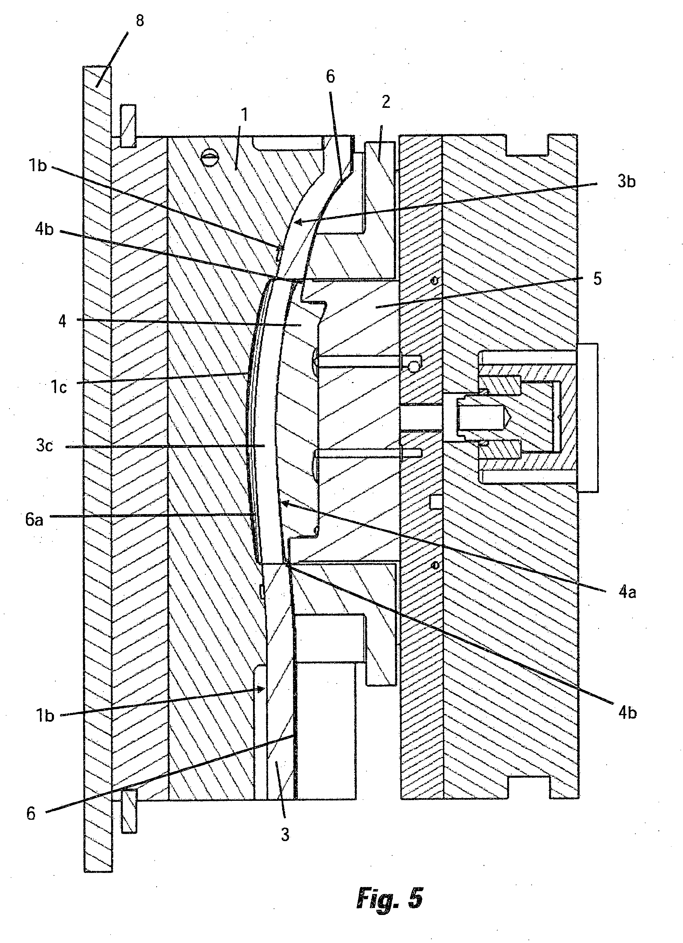

Thereafter, the core insert -4- is further moved out of the core device -5-towards the female mould part's moulding wall portion -1 c- (cf. figure 4) until the decorated foil portion -6a- is pressed by the insert's pushing surface -4a- against the moulding wall portion -1 c- where it is subjected to thermoforming so that it becomes attached thereto (cf. figure 4). The core insert -4- then retreats into the core device -5- (cf. figure 5), and the core device -5- with the core insert -4- is brought back to its initial position in which the core insert's pushing surface -4a- flushes with the injection male mould part's restraining surface -2a- (cf. figure 6). The thermoformed decorated foil portion -6a- remains attached to the female mould part's moulding wall portion -1c-. As shown in figure 6, the thermoforming male mould part -2- is then again positioned in the resting position shown in figure 1, whereas the female mould part -1- carries the thermoformed decorated foil portion -6a- attached to the moulding wall portion -1c- of the moulding wall -1b-. Portions of the foil -6- remaining thereon may be removed to prepare the pattern plate -3- for cutting and thermoforming a next decorated foil portion -6a-.

The female mould parte -1- with the thermoformed decorated foil portion -6a-is then brought in a position facing the injection male mould -18- (cf. figure 7). In this position, the shaping surface -18a- of the injection male mould part -18- faces the moulding wall -1 b- of the moulding cavity -1 a-, and the fixed insert's shaping surface section -19a- faces the thermoformed decorated foil portion -6a- that is attached to the moulding cavity's mould wall portion -1c-.

As shown in figure 8, the female mould part -1- then closes against the injection male mould part -18- such that a narrow gap is left between the male mould part's shaping surface -18a- on the one side, and the thermoformed decorated foil portion -6a- and the female mould part's moulding wall -1 b- on the other side. A plastic resin layer -12- is then injected into this gap and the thermoformed decorated foil portion -6a- is thus made to fuse with the resin layer -12- to produce a surface decorated resin article -17-.

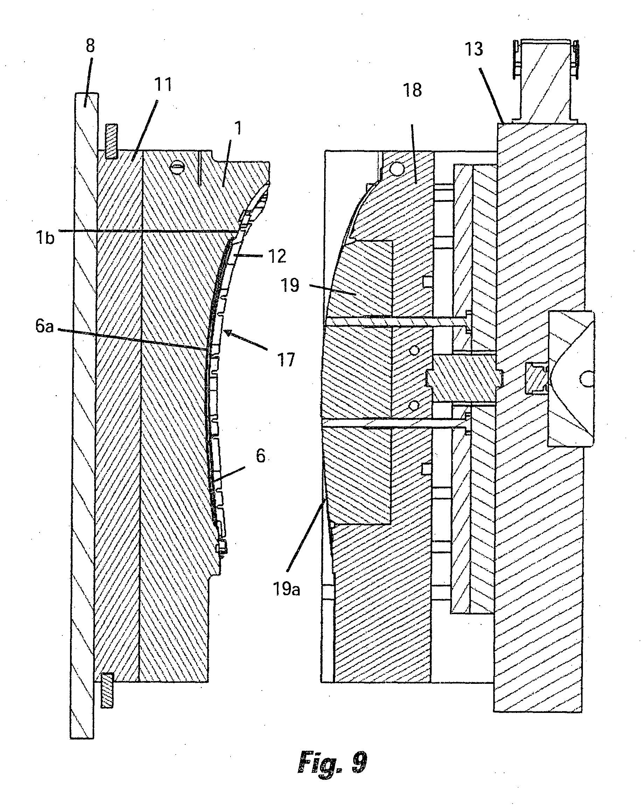

Finally, the female mould part is opened again and the surface decorated resin articles -17- remains on the female mould part's moulding wall -1 b- (cf. figure 9) from where it can be extracted in a *per se* conventional manner.

The moulding device further comprises *per* se conventional resin injecting means (not shown in figures 7-9) for injecting resin between the shaping surface -18a- and the moulding wall -1 b- when the injection male mould part -18- is in the moulding position.

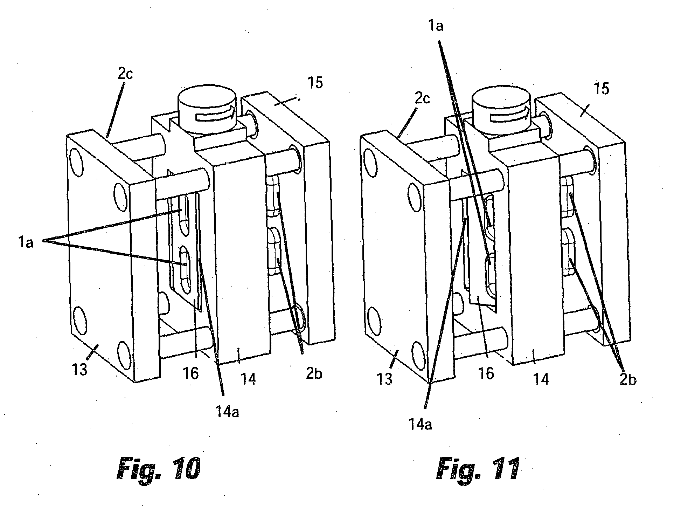

Figures 10-18 show embodiments of the moulding device according to the present invention that are working in an analogue manner to that the embodiment of the moulding device as describe herein above with reference to figures 1-9.

Figures 10 and 11 show an embodiment where the moulding device is implemented as a spin stack mould comprising an injection side male mould tool holder as a first male mould tool holder -15-, a middle female mould tool holder -14-and a second male mould tool holder -13-, and a revolving female mould part -16-arranged in a central opening -14a- in the middle female mould tool holder -14- and that is rotary about a vertical axis such that, in operation, in the embodiment shown, the rotary female mould part -16- stepwise revolves by 90°. In the embodiment shown, the revolving female mould part -16- has four sides each of which has two moulding cavities, although in other possible embodiments in may have more or less cavities (for example one cavity or four or eight depending on the geometry and complexity of the part) and also less working sides (for example can rotate 180° each time having 2 sides).

On the second male mould tool holder -13-, there is a injection male mould unit -2c- facing one side of the middle female mould tool holder -14-. The structure of the thermoforming male mould unit -2b- is analogous to that of the thermoforming male mould part -2- shown in figures 1-6 i.e. it comprises the restraining surface -2a-, the movable core -5-, core insert -4- and pushing surface -4a- shown in figures 1-6.

A second male mould unit -2c- facing the opposite side of the middle female mould tool holder -14- is positioned on the second male mould tool holder -13-. The second male mould unit -2c- has a structure which is analogous to that of the injection mould part -18- shown in figures 7-9.

Each time the mould opens, the female mould part -16- revolves 90° and thereby places two clear cavities -1 a- in front of the first male mould unit -2b- so that a cut and thermoformed decorated foil portion is produced in an analogue manner as described herein above with reference to figures 1-6. The thermoformed decorated foil portion remains attached to the female mould part's moulding wall portion. Upon opening of the first male mould unit -2b- and rotation of the female mould part -16-, the moulding cavities -1a- with the thermoformed decorated foil portions on each side of the female mould part -16- become successively placed in front of the second male mould unit -2c- placed on the second male mould tool holder -13- so that, when the second male mould unit -2c- closes against the female mould part -16- it is facing, a resin layer is injected into each cavity as described herein above such that the resin layer fuses with the thermoformed decorated foil portion in each cavity -1a- and a surface decorated resin article is produced in each cavity -1a-. Thermoformed decorated foil portions and surface decorated resin articles con thus be obtained simultaneously each time the female mould part -16-revolves. The formed articles are then extracted from the female mould part parts.

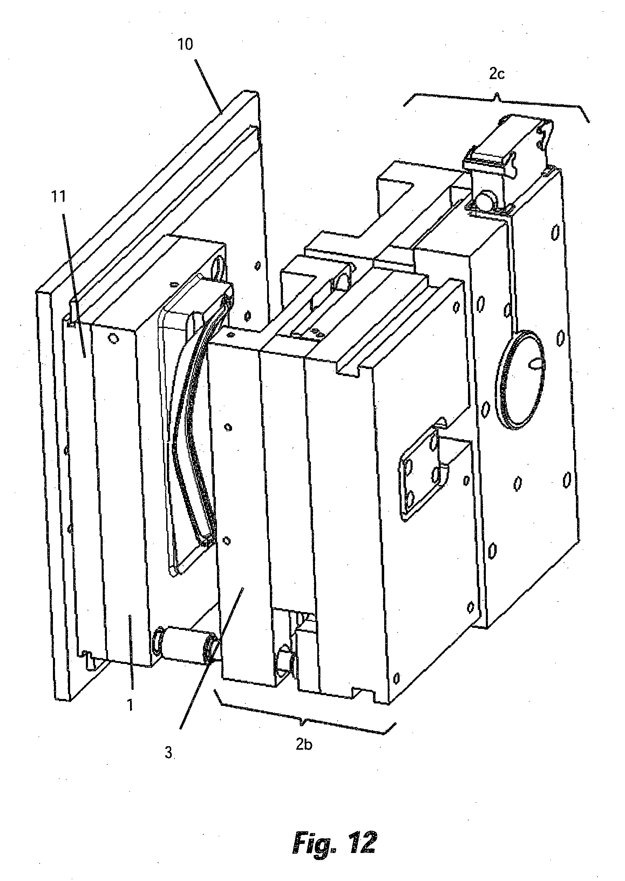

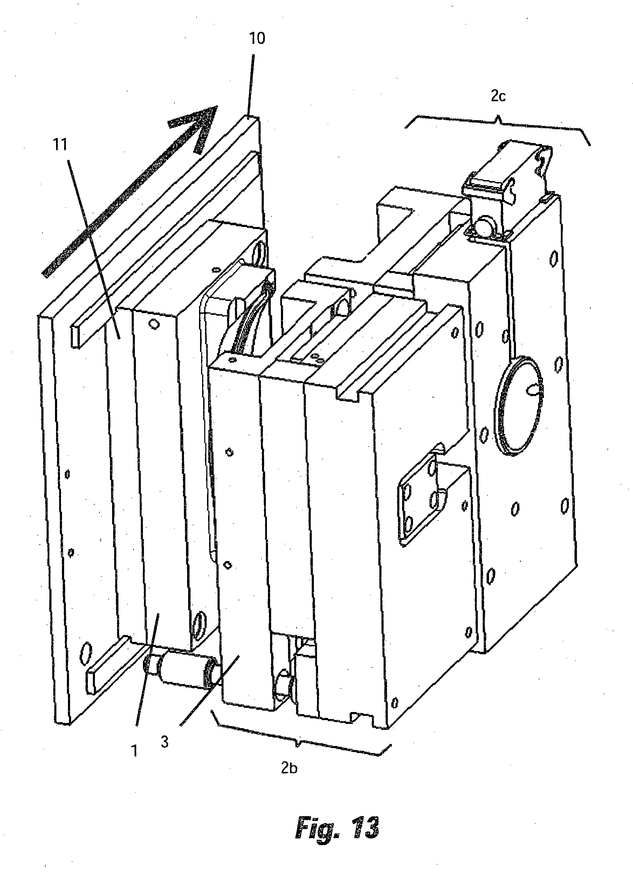

In the embodiment shown in figures 12 and 13, the moulding device is a movable cavity moulding device comprising, on one side, a female mould part -1-analogous to that described herein above with reference to figures 1-9 affixed to a movable female mould tool holder -11- that moves along a guiding carrier plate -10-facing the male mould units -2b, 2c- positioned on the other side. The thermoforming male mould unit -2b- has a structure which is analogue to that of the male mould part -2- shown in figures 1-6 i.e. it comprises the shaping surface -2a-, the movable core -5-, core insert -4- and pushing surface -4a- shown in figures 1-6. The injection male mould unit -2c- has a structure analogous to that of injection mould part -18- shown in figures 7-9.

In operation of the moulding device according to this embodiment, the female mould part -1- is placed in front of the thermoforming male mould unit -2b- (cf. figure 12) and the decorated foil portion is cut, thermoformed and positioned in the female mould part's moulding cavity analogue to what has been described herein before with reference to figures 1-6. Thereafter the female mould part -1- carrying the thermoformed decorated foil portion is placed in front of the injection male mould unit -2c- (cf. figure 13) where, upon closing of the injection male mould unit -2c-against the so placed female mould part -1-, resin is injected and the final surface decorated resin article is produced in a way that is analogous to that which has been described herein above with reference to figures 7-9.

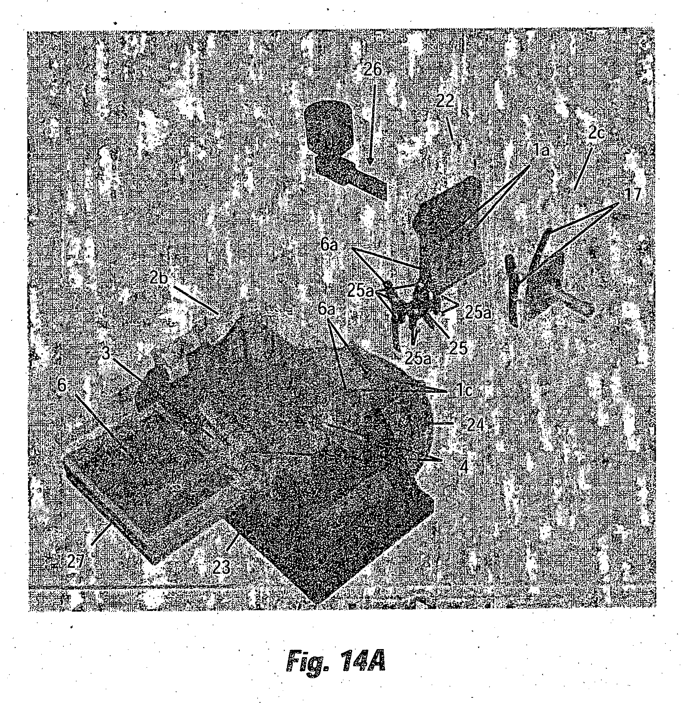

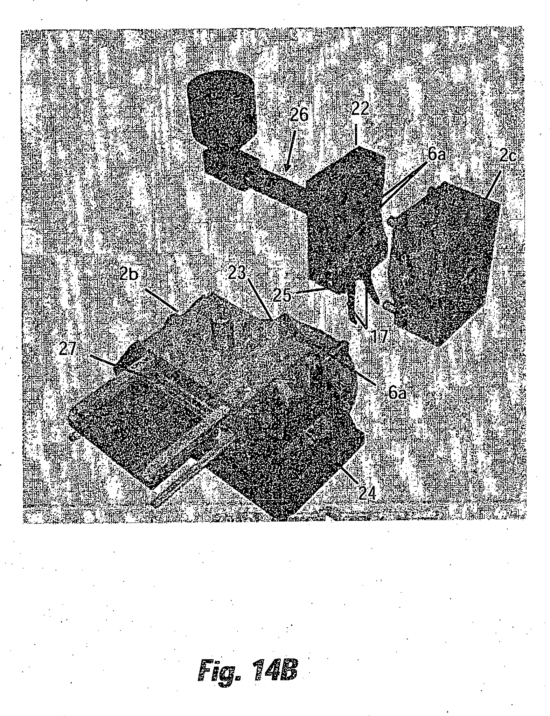

Figures 14A-14C show an embodiment of moulding device comprising a thermoforming mould unit comprising a thermoforming male mould unit -2b- with two core inserts -4- and a correspondingly shaped pattern plate -3- having an opening for passage of each of the core inserts -4-, and thermoforming female mould part -23- mounted on a rotary female tool holder -24- and comprising four concave thermoforming portions -1c- of which only two are shown in each of figures 14A and 14B. The moulding device also comprises an injection mould unit comprising an injection male mould unit -2c- and a separate injection female mould part -22-connected to *per se* conventional resin injection means -26-.

The moulding device further comprises extracting and positioning means -25- that are only schematically shown in figures 14A and 14B. The extracting and positioning means (25) are designed to position the thermoformed decorated foil portion -6a- extracted from the thermoforming female mould part -24- onto a part of the moulding wall -1 b- of the separate injection female mould part -22- where it faces the injection male mould part -2c, 18- for making said surface decorated resin article -17-. In the embodiment shown in figures 14A and 14B, the extracting and positioning means -35- are further designed to extract the surface decorated resin article from the injection mould unit, and comprise a head device -25- provided with suction cups -25- connected to a *per se* conventional pneumatic system (not shown in the figures). The head device -25- is rotably coupled to an also *per* se conventional carrying system (not shown in the drawings) designed to move the head device -25- to the various positions needed to extract the thermoformed decorated foil portions -6a- from the thermoforming female mould part -23- and position them on the moulding wall -1c- of the injection female mould part -22-, and to withdraw the surface decorated resin articles -17- from the injection mould unit. Four suction cups -25a- are arranged on each side of the head device -25- such that a group of two suction coups -25a- is positioned at the edge portions of each side. Each of the group of suction cups -25a- is used to adhere to a thermoformed decorated foil portion -6a- and/or to a surface decorated resin article -17- during the transport thereof from and to the various positions required for making the surface decorated resin articles -17- in the moulding device.

The thermoforming male mould unit -2b- and the thermoforming female mould part -23- have the same basic structure and work in basically the same way as described hereinabove with reference to figures 1-6. However, the thermoforming female part -23- does not comprise the moulding cavity -1 a- with the moulding wall -1 b- but only the concave thermoforming portions -1 c- that are shaped complementarily to convex pushing surfaces of the two core inserts -4-. The injection mould unit comprises two moulding cavities -1a- with their respective moulding walls which are comprised in the separate injection female mould part -22-and are shaped complementarily to two shaping surfaces (not shown in figures 14A and 14B) of the injection male mould unit -2c-. The injection male mould unit -2c-has the same basic structure and works in basically the same way as described hereinabove with reference to figures 7-9 the only differences being that it has two shaping surfaces and that the surface decorated resin articles -17- as obtained stay on the shaping surfaces before they are extracted from the injection mould unit (cf. figure 14A).

The moulding device shown in figures 14A-14C operates as follows:
In the position shown in figure 14A, the rotary tool holder -24- has rotated the thermoforming female mould part -23- such that two thermoformed decorated foil portions -6a- prepared in the thermoforming mould unit and located in respective thermoforming portions -1 c- have become placed outside the thermoforming mould part in an extracting position from where the thermoformed decorated foil portions -6a- are ready to be extracted by the extracting and positioning means -25-. The thermoforming mould unit is open thus allowing the insertion of a decorated foil -6-by means of a foil carrying device -27- into the thermoforming mould unit. The head device -25- is shown in a position where it carries two thermoformed decorated foil portions -6a- extracted from the thermoforming female mould part -23- in a previous step, towards the opened injection mould unit to place them on moulding wall portions of respective moulding cavities -1 a- of the injection female mould part -22-. In this position, a pair of surface decorated resin articles -17- that had been prepared in a still previous step is held on the shaping surfaces of the injection male mould unit -2c-.

After having placed the thermoformed decorated foil portion -6a- on the moulding wall portions, the head device moves over to the injection male mould unit -2c- and withdraws the surface decorated resin article from the injection male mould unit -2c-, so that the moulding device gets into the position shown in figure 14B where the thermoforming mould unit has closed to thermoform a subsequent pair of thermoformed decorated foil portions -6a-. In the meantime, the foil carrying device has become inserted into the thermoforming mould unit and the thermoforming mould unit has closed to prepare the next pair of thermoformed decorated foil portions.

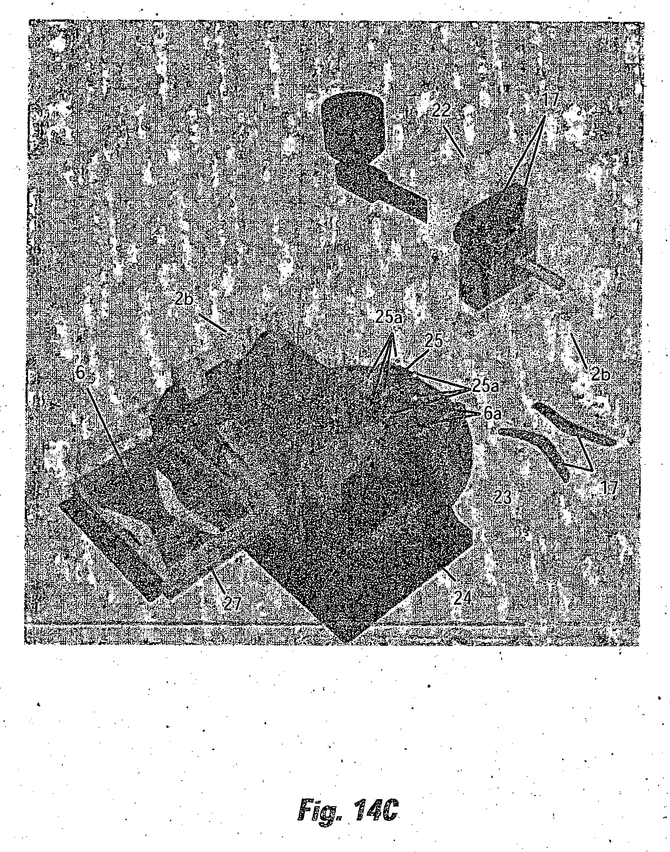

From the position shown in figure 14B, the head device -25- first rotates 90° to the right so as to deposit the surface decorated resin articles -17- onto, for example, a conveyor belt or a tray (not shown in the drawings). Thereafter, the mould device goes to the position shown in figure 14C where the head device -15-rotates such that it may extract the previously prepared pair of thermoformed decorated foil portions -6a- from the thermoforming female mould part -23-. At this stage, the thermoforming mould unit has opened again thus allowing the foil carrying device -27- with the decorated foil -6- from which the decorated foil portions have been cut out, to withdraw therefrom. Also, a subsequent pair of surface decorated resin articles -17- has been prepared in the injection mould part.

In the next stage, the head device -25- again moves towards the injection mould unit, and the thermoforming female mould part -23- is rotated so as to place subsequent pair of thermoformed decorated foil portions -6a- into the extracting position. At the same time, the foil carrying device is charged with the next decorated foil -6- and introduced into the thermoforming unit. Thereafter, the moulding device again gets into the position shown in figure 14A from where it performs the same operations as described herein above with reference to figures 14B and 14C. The operation of the moulding device according to this third embodiment is thus cyclical as described with reference to figures 14A-14C.

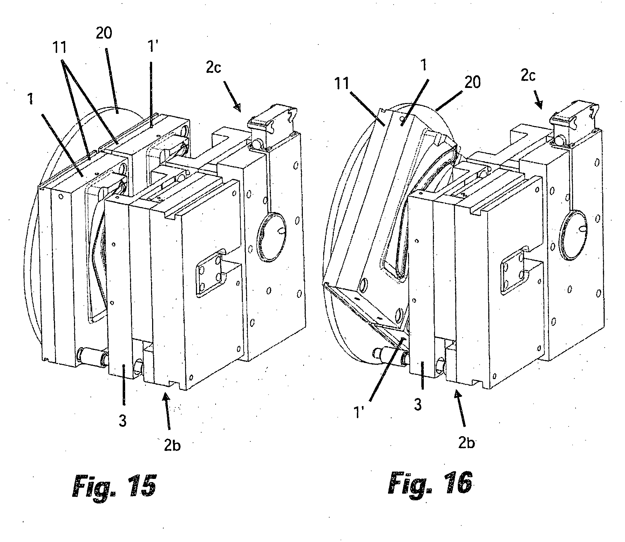

The embodiment shown in figures 15 and 16, the moulding device comprises a rotary carrier plate -20- as a female mould tool holder. The carrier plate -20-carries two female mould part parts -1-, -1'-, facing two male mould units -2a-, -2b-. The structure and function of the thermoforming male mould unit -2b- is basically the same as that of the thermoforming male mould unit -2b- described herein above with reference to figures 12 and 13.

The female mould parts -1-, -1'- have the same structure as that of the female mould part -1- described herein above with reference to figures 1-9. However, as the female mould part parts -1-, -1'- are affixed to a stationary female mould tool holder -11- that is attached to the rotary carrier plate -20- that is rotary about a horizontal axis which is perpendicular to the closing direction of the moulding device, upon rotation of the rotary carrier plate -20-, the first female mould part -1- becomes inversely positioned in front of the second male mould unit -2c-, and the second female mould part -1'- becomes positioned in front of the first male mould unit -2b-. The structure and function of the injection male mould unit -2c- is thus also basically the same as that of the injection male mould part -2c- described herein above with reference to figures 12 and 13, but it is placed upside down so as to reciprocate the position of the first female mould part -1- with the thermoformed decorated foil portion that is turned upside down upon rotation towards the injection male mould unit.

In operation of the moulding device according to this embodiment, the first female mould part -1- is placed in front of the thermoforming male mould part (cf. figure 15) and the decorated foil portion is thermoformed, cut and positioned in the first female mould part's moulding cavity in an analogous manner to that which has been described herein before with reference to figures 1-6. The second female mould part -1' is placed facing the injection male mould unit -2c-. Thereafter the first female mould part -1- carrying the thermoformed decorated foil portion rotates (cf. figure 16) to become placed in front of the injection male mould unit -2c- where, upon closing of the second male mould part -2c- against the so placed first male mould part -1-, resin is injected and the final surface decorated resin article is produced in a way that is analogous to that which has been described herein above with reference to figures 7-9. Upon rotation of the carrier plate -20- the second female mould part -1'- is simultaneously placed in front of the first male mould unit -2b- such that the formation of a thermoformed decorated foil portion and production of the surface decorated resin article can be performed simultaneously.

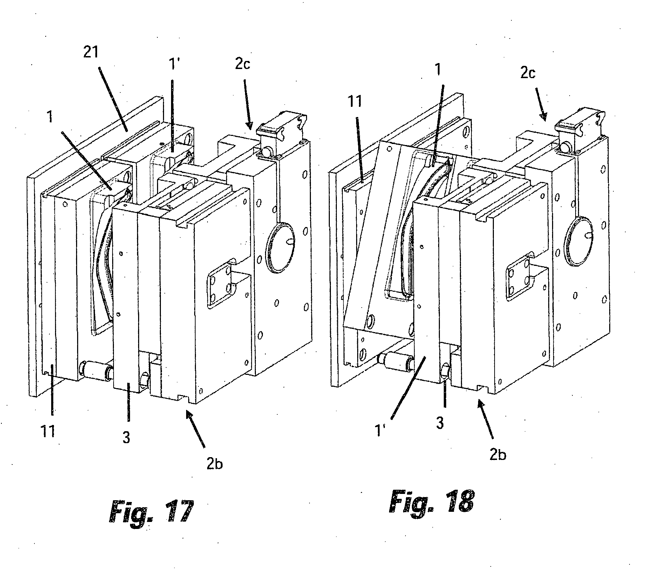

The embodiment shown in figures 17 and 18 is basically the same as that shown in figures 15 and 16 except that, with regard to its structure, the female mould part parts are not affixed to a stationary carrier plate -21- but to a rotary female mould tool holder -11- that is rotatingly to a stationary carrier plate -21-.

## Claims

1. A moulding device for preparing surface decorated resin articles comprising
a first mould unit for making a decorated foil portion (6a) from a decorated foil (6), the first mould unit being a thermoforming and cutting unit that comprises a female mould part (1, 1', 16, 23) affixed to a female tool holder (11, 14, 24) and comprising a thermoforming portion (1c) surrounded by a moulding wall (1b), and a thermoforming male mould unit (2, 2b, 3, 7, 15) comprising a thermoforming male mould part (2, 2b,) affixed to a first male mould tool holder (7, 15) having a restraining surface (2a) facing said moulding wall (1 b),
a second mould unit for making said surface decorated resin article (17) and comprising an injection male mould unit (2c, 13, 18) comprising an injection male mould part (2c, 18) having a shaping surface (18a) being complementary to a moulding wall (1 b) of a moulding cavity (1 a),
resin injecting means (10) for injecting a layer of resin (12) between the shaping surface (18a) and the moulding wall (1b) carrying the decorated foil portion (6a) when the moulding device is in a moulding position, such that decorated foil portion (6a) becomes fused with the layer of resin (12) and a surface decorated resin article (17) is formed,
wherein the thermoforming male unit comprises a core device (5) integrated in the thermoforming male mould part (2, 2b) and a pattern plate (3) comprising a first surface portion (3a) shaped complementarily to said restraining surface (2a) a second surface portion fitting with said moulding wall (1 b), and an opening (3c),
**characterized in that**
the core device (5) comprises at least one shiftable core insert (4) with an outer pushing surface (4a) that is a part of said restraining surface (2a),
the thermoforming male unit further comprises shifting means (9) for shifting the core insert (4) towards and away from the female mould part (1, 1', 16) between a first position where said pushing surface (4a) flushes with said restraining surface (2a) and a second position where the pushing surface (4a) is pushed towards the thermoforming portion (1c),
the opening (3c) in the pattern plate (3) is suitable for passage of at least a portion of said core insert (4), and
the pattern plate (3) is movable between said female mould part (1, 1', 16, 23) and said thermoforming male mould part (2, 2b) so that, when the first surface portion (3a) is in contact with the restraining surface (2a), when the second surface portion (3b) is in contact with said moulding wall (1b) and when the core insert (4) is shifted towards the female mould part (1, 1', 16, 23), the decorated foil (6) is stretched over said pushing surface (4a) and a corresponding decorated foil portion (6a) is pushed through said opening (3a) towards said moulding wall portion (1c) and cut out by a peripheral cutting edge portion (4b) of said pushing surface (4a), pressed against the thermoforming portion (1c), thermoformed and held thereon; and
the female tool holder (11, 14, 24) is displaceable to place the female mould part (1, 1', 16, 23) alternately in the thermoforming position facing the thermoforming male mould part (2, 2b, 3) for making the thermoformed decorated foil portion (6a), and in an alternate position where the female mould part (1, 1', 16, 23) does not face the thermoforming male mould part (2, 2b, 3), such that, when positioned in said thermoforming position, the female mould part (1, 1', 16, 23) and the thermoforming male mould part (2, 2b, 3) are positionable from and towards an opened position where the female mould part (1, 1', 16, 23) is distanced from the thermoforming male mould part (2, 2b, 3) and a thermoforming position where the female mould part (1, 1', 16, 23) closes against the thermoforming male mould part (2, 2b, 3).

2. A moulding device according to claim 1, **characterized in that**
said alternate position is a resting position in which the female mould part (1, 1', 16) carrying the thermoformed decorated foil portion (6a) faces the injection male mould part (2c, 18) for making said surface decorated resin article (17);
said female mould part (1, 1', 16) comprises the moulding cavity (1a) with the moulding wall (1 b);
the second surface portion (1b) of the pattern plate (3) is shaped complementarily to the moulding wall (1 b);
the thermoforming portion (1c) is a moulding wall portion (1 c) of the moulding wall (1 b);
the female mould part (1, 1', 16) and the injection male mould part (2c, 18) are positionable from and towards a resting position where the injection male mould part (2c, 18) is distanced from the female mould part (1, 1', 16) and a moulding position where the shaping surface (18a) is close to said moulding wall (1 b);
the second surface portion (3b) of the pattern plate (3) is shaped complementarily to said moulding wall (1b) such that the second surface portion (3b) fits with said moulding wall (1 b).

3. A moulding device according to claim 2, **characterized in that** the female tool holder (11) is linearly displaceable by displacing means from the thermoforming male mould unit (2b) to the injection male mould unit (2c) along a guiding carrier plate (10) facing the male mould units (2b, 2c).

4. A moulding device according to claim 2, **characterized in that** the female mould part comprises a first female mould part (1) and a second female mould part (1') affixed to the female tool holder (11) such that, when the first female mould part (1) is positioned by the displacing means to face the first male mould unit (2b), the second female mould part (1') becomes positioned facing the second male mould unit (2c), and **in that** the female tool holder (11) is rotary by the displacing means about a horizontal axis along an angle of 180°.

5. A moulding device according to claim 4, characterized that the female tool holder (11) is connected to a rotary carrier plate (20).

6. A moulding device according to claim 4, characterized that the female tool holder (11) is rotably connected to a stationary carrier plate (21).

7. A moulding device according to claim 2, **characterized in that**
the first male mould unit (2b) is affixed to a first male mould tool holder (15) and the second male mould unit (2c) is affixed to a second male mould tool holder (13);
the female mould tool holder (14) is located between a the first and the second male mould unit (2b, 2c);
the female mould part (16) comprises at least one side portion comprising at least one moulding cavity (1a), and is revolvingly positioned in an opening (14a) in the female mould tool holder (14) such that it can revolve about a vertical axis so that when the female mould part revolves, said side portion alternately is positioned to face said first male mould unit (2b) and said second male mould unit (2c).

8. A moulding device according to claim 7, **characterized in that** the female mould part (16) comprises a plurality of side portions each comprising at least one moulding cavity (1 a) so that when the female mould part revolves, each said side portion is positioned alternately to face said first male mould unit (2b) or said second male mould unit (2c).

9. A moulding device according to claim 1, **characterized in that**
the female mould part (23) is a thermoforming female mould part;
it comprises a separate injection female mould part (22) comprising the moulding cavity (1a) with the moulding wall (1b);
said alternate position is an extracting position in which the thermoformed decorated foil portion (6a) is extracted from the injection female mould part (22) by extracting and positioning means (25);
the separate injection female mould part (22) is comprised in the second mould unit for making said surface decorated resin article (17)
the extracting and positioning means (25) are designed to position the thermoformed decorated foil portion (6a) extracted from the thermoforming female mould part (24) onto a part of the moulding wall (1b) of the separate injection female mould part (22) where it faces the injection male mould part (2c, 18) for making said surface decorated resin article (17).

10. A moulding device according to claim 9, **characterized in that** the female tool holder (24) is rotary.

11. A method for preparing surface decorated resin articles in a moulding device, the method comprising
making a decorated foil portion (6a) from a decorated foil (6) in a first mould unit,
making said surface decorated resin article (17) in a second mould unit comprising an injection male mould unit (2c, 13, 18) comprising an injection male mould part (2c, 18) having a shaping surface (18a) being complementary to a moulding wall (1b) of a moulding cavity (1a),
injecting a layer of resin (12) by using resin injecting means (10) between the shaping surface (18a) and the moulding wall (1b) carrying the decorated foil portion (6a) when the second mould unit is in a moulding position, such that decorated foil portion (6a) becomes fused with the layer of resin (12) and a surface decorated resin article (17) is formed,
extracting the surface decorated resin article (17) from the moulding device, the decorated foil portion (6a) being cut and thermoformed in the first mould unit which is a thermoforming and cutting unit, by
placing the decorated foil (6) between a restraining surface (2a) of a thermoforming male mould unit (2, 2b, 3, 7, 15) and a pattern plate (3) positioned between a thermoforming portion (1c) of a female mould part (1, 1', 16, 23) and the thermoforming male mould unit (2, 2b, 3, 7, 15),
the female mould part (1, 1', 16, 23) being affixed to a female tool holder (11, 14, 24) and comprising a moulding wall (1b) surrounding the thermoforming portion (1c) and facing the restraining surface (2a),
the thermoforming male mould unit (2, 2b, 3, 7, 15) comprising a thermoforming male mould part (2, 2b,) affixed to a first male mould tool holder (7, 15), and a core device (5) integrated in the thermoforming male mould part (2, 2b),
the pattern plate (3) comprising a first surface portion (3a) shaped complementarily to said restraining surface (2a), a second surface portion (3b) fitting with said inner surface (1b), and an opening (3c)
the method **characterized by** the steps of;
closing the first mould unit such that the decorated foil becomes immobilized between the restraining surface (2a) and the first surface portion (3a) of the pattern plate (3) which is movable between said female mould part (1, 1', 16, 23) and said thermoforming male mould part (2, 2b), and the pattern plate (3) becomes held between the restraining surface (2a) and said moulding wall (1b) of the female mould part (1, 1', 16, 23);
shifting, by using shifting means (9), a shiftable core insert (4) which has a pushing surface (4a) that is part of said restraining surface (2a) of the core device (5),from a first position a first position where said pushing surface (4a) flushes with said restraining surface (2a), through said opening (3c) which is suitable for passage of at least a portion of said core insert (4), towards the female mould part (1, 1', 16, 23), to a second position where said pushing surface (4a) protrudes from the restraining surface (2a) and is pressed towards the thermoforming portion (1c) of said moulding wall (1b), whereby the decorated foil (6) becomes stretched over the pushing surface (4a) and is pulled through said opening (3c), such that the decorated foil portion (6a) is cut out by a peripheral cutting edge (4b) of the core insert (4) and pressed by the pushing surface (4a) against the thermoforming portion (1c) of the moulding wall (1 b), thermoformed and held thereon;
subjecting the decorated foil portion (6a) to thermoforming;
moving the core insert (4) back to said first position such that the thermoformed decorated foil portion (6a) remains held on the thermoforming portion (1 b);
opening the first mould unit such that the female mould part (1, 1', 16, 23) becomes distanced from the thermoforming male mould part (2, 2b, 3);
displacing the female tool holder (11, 14) by displacing means such that the female mould part (1, 1', 16, 23) becomes placed into an alternate position where the female mould part (1, 1', 16, 23) does not face the thermoforming male mould part (2, 2b, 3).

12. A method according to claim 11, **characterized in that**
said alternate position is a resting position in which the female mould part (1, 1', 16) carrying the thermoformed decorated foil portion (6a) faces the injection male mould part (2c, 18) for making said surface decorated resin article (17) in the second mould unit;
said female mould part (1, 1', 16) comprises the moulding cavity (1a) with the moulding wall (1b);
the thermoforming portion (1c) is a moulding wall portion (1c) of the moulding wall (1b);
the second surface portion (3b) of the pattern plate (3) is shaped complementarily to said moulding wall (1 b) such that the second surface portion (3b) fits with said moulding wall (1 b);
and **in that**, after the female mould part (1, 1', 16) carrying the thermoformed decorated foil portion (6a) has been brought to face the injection male mould part (2c, 18), the second mould unit is brought to said moulding position in which a layer of resin is injected between the shaping surface (18a) and the moulding wall (1b) carrying the thermoformed decorated foil portion (6a).

13. A method according to claim 12, **characterized in that** the female mould part (1) is brought to said resting position by means of a female tool holder (11) that is linearly displaceable from the thermoforming male mould unit (2b) to the injection male mould unit (2c) along a guiding carrier plate (10) facing the male mould units (2b, 2c).

14. A method according to claim 12, **characterized in that**
a first female mould part (1) and a second female part (1') are used, the female mould parts (1, 1') being affixed side-by-side to a female tool holder (11) that is rotary along an angle of 180°;
the female tool holder (11) is rotated in such a manner that, when the first female mould part (1) is positioned to face the thermoforming male mould unit (2b), the second female mould part (1') becomes positioned facing the injection male mould unit (2c).

15. A method according to claim 12, **characterized in that**
the female mould tool holder (14) is located between a the thermoforming male mould unit (2b) and the injection male mould unit (2c);
a female mould part (16) comprising at least one side portion comprising at least one moulding cavity (1a) and positioned in an opening (14a) in the female mould tool holder (14) such that it can revolve about a vertical axis, is made to revolve so that said side portion becomes alternately positioned to face said thermoforming male mould unit (2b) or said injection male mould unit (2c).

16. A method according to claim 15, **characterized in that** the female mould part (16) comprises a plurality of side portions each comprising at least one moulding cavity (1 a) so that when the female mould part revolves, each said side portion becomes positioned alternately to face said thermoforming male mould unit (2b) and said injection male mould unit (2c).

17. A method according to claim 11, **characterized in that**
in said second position which is an extracting position, the thermoformed decorated foil portion (6a) is extracted by extracting and positioning means (25) from the female mould part (23) which is a thermoforming female mould part;
the extracted thermoformed decorated foil portion (6a) is transferred to the second mould unit comprising a separate injection female mould part (22) comprising the moulding cavity (1 a) with the moulding wall (1b) and the injection male mould part (2c, 18), when said second mould unit is in a resting position where the injection female mould part (22) is distanced from the injection male mould part (2c, 18), such that the thermoformed decorated foil portion (6a) is placed onto a part of the moulding wall (1b);
and **in that** the second mould unit is brought to said moulding position in which a layer of resin is injected between the shaping surface (18a) and the moulding wall (1b) carrying the thermoformed decorated foil portion (6a).

18. A method according to claim 17, **characterized in that** that the thermoformed decorated foil portion (6a) is brought into said extracting position by rotating the thermoforming female mould part (23).

## Patentansprüche

1. Formgebungsvorrichtung zum Herstellen oberflächenverzierter Kunststoffartikel (17) umfassend
eine erste Formgebungseinheit zum Fertigen eines verzierten Folienabschnitts (6a) aus einer verzierten Folie (6), wobei die erste Formgebungseinheit eine Thermoformgebungs- und Schneideinheit ist, umfassend ein an einem weiblichen Werkzeughalter (11, 14, 24) befestigtes weibliches Formgebungsteil (1, 1', 16, 23), welches einen von einer Formwandung (1b) umgebenen Thermoformungsbereich (1c) umfasst, und eine männliche Thermoformgebungseinheit (2, 2b, 3, 7, 15) umfassend ein an einem männlichen Formgebungswerkzeughalter (7, 15) befestigtes männliche Thermoformgebungsteil (2, 2b), welches eine der besagten Formwandung (1b) zugewandte Haltefläche (2a) hat,
eine zweite Formgebungseinheit zum Fertigen des besagten oberflächenverzierten Kunststoffteils (17) umfassend eine männliche Spritzgusseinheit (2a, 13, 18) umfassend ein männliches Spritzgießteil (2c, 18), die eine Formungsoberfläche (18a) hat, welche komplementär zur Formwandung (1b) eines Formhohlraums (1a) ist, Kunststoffeinspritzmittel (10) zum Einspritzen einer Kunststoffschicht (12) zwischen die Formungsoberfläche (18a) und die den verzierten Folienabschnitt (6a) tragende Formwandung (1b), wenn die Formgebungsvorrichtung in einer Formgebunsposition ist, so dass der verzierte Folienabschnitt (6a) mit der Kunststoffschicht (12) verbunden und ein oberflächenverziertes Kunststoffteil (17) geformt wird, wobei die männliche Thermoformgebungseinheit (2, 2b, 3, 7, 15) ein in das männliche Thermoformteil (2, 2b) integriertes Kernteil (5) und eine Musterplatte (3) umfasst, welche einen ersten Oberflächenabschnitt (3a), der komplementär zur besagten Haltefläche (2a) geformt ist, einen zweiten Oberflächenabschnitt (3b) passend zur besagten Formwandung (1b) und eine Öffnung (3c) aufweist,
**dadurch gekennzeichnet, dass**
das Kernteil (5) mindestens einen verschiebbaren Kerneinsatz (4) mit einer äußeren Druckfläche (4a) umfasst, welche Teil besagter Haltefläche (2a) ist,
wobei die männliche Thermoformgebungseinheit (2, 2b, 3, 7, 15) weiter ein Schubmittel (9) zum Schieben des Kerneinsatzes (4) zum und vom weiblichen Formgebungsteil (1, 1', 16) zwischen einer ersten Position, in der die besagte Druckfläche (4a) mit der besagten Haltefläche (2a) abschließt, und einer zweiten Position, in der die Druckfläche (4a) zum Thermoformungsbereich (1c) gedrückt wird, umfasst,
wobei die Öffnung (3c) in der Musterplatte (3) zum Durchlass zumindest eines Teils besagten Kerneinsatzes (4) geeignet ist, und
wobei die Musterplatte (3) zwischen besagtem weiblichen Formgebungsteil (1, 1', 16, 23) und besagtem männlichen Thermoformgebungsteil (2, 2b) so bewegbar ist, dass, wenn der erste Oberflächenabschnitt (3a) mit der Haltefläche (2a) in Kontakt steht, wenn der zweite Oberflächenabschnitt (3b) in Kontakt mit besagter Formwandung (1b) steht und wenn der Kerneinsatz (4) zum weiblichen Formgebungsteil (1, 1', 16, 23) geschoben ist, die verzierte Folie (6) über besagte Druckfläche (4a) gespannt und ein entsprechender verzierter Folienabschnitt (6a) durch besagte Öffnung (3a) zum besagten Thermoformungsbereich (1c) gedrückt und von einem umlaufenden Schneidkantenabschnitt (4b) besagter Druckfläche (4a) ausgeschnitten, gegen den Thermoformungsbereich (1c) gedrückt, thermogeformt und darauf gehalten wird; und
wobei der weibliche Werkzeughalter (11, 14, 24) versetzbar ist, um das weibliche Formgebungsteil (1, 1', 16, 23) wechselweise in die dem männlichen Thermoformgebungsteil (2, 2b, 3) zugewandte Thermoformungsposition zum Fertigen des thermgeformten verzierten Folienabschnitts (6a) und in eine andere Position, in der das weibliche Formgebungsteil (1, 1', 16, 23) nicht dem männlichen Thermoformgebungsteil (2, 2b, 3) zugewandt ist, zu setzen, so dass, das weibliche Formgebungsteil (1, 1', 16, 23), wenn es sich in besagter Thermoformposition befindet, und dass männliche Thermoformgebungsteil (2, 2b, 3) von und zu einer geöffneten Stellung, in der das weibliche Formgebungsteil (1, 1', 16, 23) vom männlichen Thermoformgebungsteil (2, 2b, 3) beabstandet ist, und einer Thermoformposition, in das weibliche Formgebungsteil (1, 1', 16, 23) gegen das männliche Thermoformgebungsteil (2, 2b, 3) schließt, bewegbar sind.

2. Formgebungsvorrichtung nach Anspruch 1, **dadurch gekennzeichnet, dass** besagte andere Position eine Ruheposition ist, in der das den thermogeformten verzierten Folienabschnitt (6a) tragende weibliche Formgebungsteil (1, 1', 16) dem männlichen Spritzgießteil (2c, 18) zum Fertigen besagten oberflächenverzierten Kunststoffteils (17) zugewandt ist;
wobei besagtes weibliches Formgebungsteil (1, 1', 16) den Formhohlraum (1a) mit der Formwandung (1b) umfasst;
wobei der zweite Oberflächenabschnitt (3b) der Musterplatte (3) komplementär zur Formwandung (1b) geformt ist;
wobei der Thermoformungsbereich (1c) ein Formwandungsbereich (1c) der Formwandung (1b) ist;
wobei das weibliche Formgebungsteil (1, 1', 16) und das männliche Spritzgießteil (2c, 18) von und zu einer Ruheposition, in der das männliche Spritzgießteil (2c, 18) vom weiblichen Formgebungsteil (1, 1', 16) beabstandet ist, und einer Formgebungsposition, in der die Formungsoberfläche (18a) dicht an besagter Formungswand (1b) ist, bewegbar sind;
wobei der zweite Oberflächenabschnitt (3b) der Musterplatte (3) komplementär zu besagter Formungswand (1b) geformt ist, so dass der zweite Oberflächenabschnitt (3b) zur besagten Formungswand passt (1b).

3. Formgebungsvorrichtung nach Anspruch 2, **dadurch gekennzeichnet, dass** der weibliche Werkzeughalter (11) durch ein Versetzmittel von der männlichen Thermoformungseinheit (2b) zur männlichen Spritzgießeinheit (2c) entlang einer den männlichen Formgebungseinheiten (2b, 2c) zugewandten Führungstragplatte (10) linear versetzbar ist.

4. Formgebungsvorrichtung nach Anspruch 2, **dadurch gekennzeichnet, dass** das weibliche Formgebungsteil ein erstes weibliches Formgebungsteil (1) und ein zweites, am weiblichen Werkzeughalter (11) befestigtes weibliches Formgebungsteil (1') umfasst, so dass, wenn das erste weibliche Formgebungsteil (1) durch das Versetzmittel versetzt wird, so dass es der ersten männlichen Formgebungseinheit (2b) zugewandt ist, das zweite weibliche Formgebungsteil (1') in eine Position gelangt, in der es der zweiten männlichen Formgebungseinheit (2c) zugewandt ist, und dass der weibliche Werkzeughalter (11) vom Versetzmittel um eine horizontale Achse um einen Winkel von 180° rotierbar ist.

5. Formgebungsvorrichtung nach Anspruch 4, **dadurch gekennzeichnet, dass** der weibliche Werkzeughalter (11) mit einer rotierbaren Tragplatte (20) verbunden ist.

6. Formgebungsvorrichtung nach Anspruch 4, **dadurch gekennzeichnet, dass** der weibliche Werkzeughalter (11) rotierbar mit einer stationären Tragplatte (21) verbunden ist.

7. Formgebungsvorrichtung nach Anspruch 2, **dadurch gekennzeichnet, dass**
die erste männliche Formgebungseinheit (2b) an einem ersten männlichen Formwerkzeughalter (15) befestigt ist und die zweite männliche Formgebungseinheit (2c) an einem zweiten männlichen Formwerkzeughalter (13) befestigt ist;
wobei der weibliche Formwerkzeughalter (14) zwischen der ersten und der zweiten männlichen Formgebungseinheit (2b, 2c) angeordnet ist;
wobei das weibliche Formgebungsteil (16) mindestens einen Seitenbereich umfassend mindestens einen Formhohlraum (1a) umfasst und drehbar in einer Öffnung (14a) im weiblichen Formgebungswerkzeughalter (14) so angeordnet ist, dass es um eine vertikale Achse drehen kann, so dass, wenn sich das weibliche Formgebungsteil (16) dreht, der besagte Seitenbereich wechselweise so positioniert wird, dass er besagter ersten männlichen Formgebungseinheit (2b) und besagter zweiter männlicher Formgebungseinheit (2c) zugewandt ist.

8. Formgebungsvorrichtung nach Anspruch 8, **dadurch gekennzeichnet, dass** das weibliche Formgebungsteil (16) eine Mehrzahl von Seitenbereichen umfasst, von denen jeder mindestens einen Formhohlraum (1a) umfasst, so dass, wenn sich das weibliche Formgebungsteil (16) dreht, jeder Seitenbereich wechselweise so positioniert wird, dass er besagter erster männlichen Formgebungseinheit (2b) oder besagter zweiter männlicher Formgebungseinheit (2c) zugewandt ist.

9. Formgebungsvorrichtung nach Anspruch 1, **dadurch gekennzeichnet, dass** das weibliche Formgebungsteil (23) ein Thermoformgebungsteil (24) ist;
wobei es ein gesondertes weibliches Spritzgießteil (22) umfassend den Formhohlraum (1a) mit der Formwandung (1b) umfasst;
wobei besagte andere Position eine abgezogene Position ist, in der der thermogeformte verzierte Folienabschnitt (6a) durch ein Abzugs- und Positioniermittel (25) vom weiblichen Spritzgießteil (22) abgezogen ist;
wobei das Abzugs- und Positioniermittel (25) ausgeführt ist, um den vom weiblichen Thermoformgebungsteil (24) abgezogenen thermogeformten verzierten Folienabschnitt (6a) auf einen Teil der Formwandung (1b) des gesonderten weiblichen Spritzgießteils (22) zu setzen, wo es dem männlichen Spritzgießteil (2c, 18) zum Fertigen des oberflächenverzierten Kunststoffteils (17) zugewandt ist.

10. Formgebungsvorrichtung nach Anspruch 9, **dadurch gekennzeichnet, dass** der weibliche Werkzeughalter (24) rotierbar ist.

11. Verfahren zum Herstellen oberflächenverzierter Kunststoffteile (17) in einer Formgebungsvorrichtung, wobei das Verfahren umfasst
Fertigen eines verzierten Folienabschnitts (6a) aus einer verzierten Folie (6) in einer ersten Formgebungseinheit, Fertigen besagten oberflächenverzierten Kunststoffteils (17) in einer zweiten Formgebungseinheit umfassend eine männliche Spritzgießeinheit (2c, 13, 18) umfassend ein männliches Spritzgießteil (2c, 18), das eine zu einer Formwandung (1b) eines Formhohlraums (1a) komplementäre Formungsoberfläche (18a) hat,
Einspritzen einer Kunststoffschicht (12) zwischen die Formungsoberfläche (18a) und die den verzierten Folienabschnitt (6a) tragende Formwandung (1b) durch Benutzung eines Kunststoffeinspritzmittels (10), wenn die zweite Formgebungseinheit in einer Formgebungsposition ist, so dass der verzierte Oberflächenabschnitt (6a) mit der Kunststoffschicht (12) verbunden und ein oberflächenverziertes Kunststoffteil (17) geformt wird; Abziehen des oberflächenverzierten Kunststoffteils (17) von der Formgebungsvorrichtung,
wobei der oberflächenverzierte Folienabschnitt (6a) in der ersten Formgebungseinheit, die eine Thermoformungs- und Schneideinheit ist, geschnitten und thermogeformt wird durch Positionieren der verzierten Folie (6) zwischen eine Haltefläche (2a) einer männlichen Thermoformgebungseinheit (2, 2b, 3, 7, 15) und eine zwischen einem Thermoformgebungsbereich (1c) eines weiblichen Formgebungsteils (1, 1', 16, 23) und der männlichen Thermoformgebungseinheit (2, 2b, 3, 7, 15) angeordneten Musterplatte (3),
wobei das weibliche Formgebungsteil (1, 1', 16, 23) an einem weiblichen Werkzeughalter (11, 14, 24) befestigt ist und eine den Thermoformgebungsbereich (1c) umgebende und der Haltefläche (2a) zugewandte Formwandung (1b) umfasst,
wobei die männliche Thermoformgebungseinheit (2, 2b, 3, 7, 15) ein an einem ersten männlichen Formgebungswerkzeughalter (7, 15) befestigtes männliches Thermoformgebungsteil (2, 2b) und ein im männlichen Thermoformgebungsteil (2, 2b) integriertes Kernteil (5) umfasst,
wobei die Musterplatte (3) einen zu besagter Haltefläche (2a) komplementär geformten ersten Oberflächenabschnitt (3a), einen zu besagter Innenfläche (1b) passenden zweiten Oberflächenabschnitt (3b) und eine Öffnung (3c) umfasst, wobei das Verfahren durch die folgenden Schritte **gekennzeichnet** ist;
Schließen der ersten Formgebungseinheit, so dass die verzierte Folie zwischen der Haltefläche (2a) und dem ersten Oberflächenabschnitt (3a) der Musterplatte (3), die zwischen besagtem weiblichen Formgebungsteil (1, 1', 16, 23) und besagtem männlichen Formgebungsteil (2, 2b) beweglich ist, festgelegt und die Musterplatte (3) zwischen der Haltefläche (2a) und besagter Formwandung (1b) des weiblichen Formgebungsteils (1, 1', 16, 23) gehalten wird;
Schieben, durch Benutzung eines Schubmittels (9), eines verschiebbaren Kerneinsatzes (4), der eine Druckfläche (4a) hat, die Teil besagter Haltefläche (2a) des Kernteils (5) ist, von einer ersten Position, in der besagte Druckfläche (4a) mit besagter Haltefläche (2a) abschließt, durch besagte Öffnung (3c), die für den Durchlass zumindest eines Teils besagten Kerneinsatzes (4) geeignet ist, zum weiblichen Formgebungsteil (1, 1', 16, 23) zu einer zweiten Position, in der besagte Druckfläche (4a) von der Haltefläche (2a) absteht und zum Thermoformgebungsbereich (1c) besagter Formwandung (1b) gedrückt wird, wobei die verzierte Folie (6) über die Druckfläche (4a) gespannt und durch besagte Öffnung (3c) gezogen wird, so dass der verzierte Folienabschnitt (6a) von einer umlaufenden Schneidkante (4b) des Kerneinsatzes ausgeschnitten und von der Druckfläche (4a) gegen den Thermoformgebungsbereich (1c) der Formwandung (1b) gedrückt, thermogeformt und darauf gehalten wird;
Unterziehen des verzierten Folienabschnitts (6a) einer Thermoformung;
Bewegen des Kerneinsatzes (4) zurück zu besagter erster Position, so dass der thermogeformte verzierte Folienabschnitt (6a) auf dem Thermoformgebungsbereich (1c) gehalten bleibt;
Öffnen der ersten Formgebungseinheit, so dass das weibliche Formgebungsteil (1, 1', 16, 23) vom männlichen Thermoformgebungsteil (2, 2b, 3) beabstandet wird;
Versetzen des weiblichen Werkzeughalters (11, 14) durch ein Versetzmitte, so dass das weibliche Formgebungsteil (1, 1', 16, 23) in eine andere Position gelangt, in der das weibliche Formgebungsteil (1, 1', 16, 23) nicht dem männlichen Thermoformgebungsteil (2, 2b, 3) zugewandt ist.

12. Verfahren nach Anspruch 11, **dadurch gekennzeichnet, dass** Besagte andere Position eine Ruheposition ist, in der das den thermogeformten verzierten Folienabschnitt (6a) tragende weibliche Formgebungsteil (1, 1', 16) dem männlichen Spritzgießteil (2c, 18) zum Fertigen besagten oberflächenverzierten Kunststoffteils (17) in der zweiten Formgebungseinheit zugewandt ist;
wobei besagtes zweites Formgebungsteil (1, 1', 16) den Formhohlraum (1a) mit der Formwandung (1b) umfasst;
wobei der Thermoformungsbereich (1c) ein Formwandungsbereich (1c) der Formwandung (1b) ist;
wobei der zweite Oberflächenabschnitt (3b) der Musterplatte (3) komplementär zu besagter Formwandung (1b) geformt ist, so dass der zweite Oberflächenabschnitt (3b) zu besager Formwandung (1b) passt;
und wobei die zweite Formgebungseinheit, nachdem das den thermogeformten verzierten Oberflächenabschnitt (6a) tragende weibliche Formgebungsteil (1, 1', 16) dem männlichen Spritzgießteil (2c, 18) zugewendet worden ist, in besagte Formgebungsposition gebracht wird, in der eine Kunststoffschicht zwischen die Formungsfläche (18a) und die den thermogeformten verzierten Folienabschnitt (6a) tragende Formwandung (1b) gespritzt wird.

13. Verfahren nach Anspruch 12, **dadurch gekennzeichnet, dass** das weibliche Formgebungsteil (1) mittels eines weiblichen Werkzeughalters (11), der von der männlichen Thermoformgebungseinheit (2b) linear zur männlichen Spritzgießeinheit (2c) entlang einer den männlichen Formgebungseinheiten (2b, 2c) zugewandten Führungstragplatte (10) bewegbar ist, in besagte Ruheposition gebracht wird.

14. Verfahren nach Anspruch 12, **dadurch gekennzeichnet, dass** ein erstes weibliches Formgebungsteil (1) und ein zweites weibliches Teil (1') benutzt werden, wobei die weiblichen Formgebungsteile (1, 1') nebeneinander an einem weiblichen Werkzeughalter (11) befestigt sind, welcher um einen Winkel von 180° rotierbar ist;
der weibliche Werkzeughalter (11) in einer solchen Weise rotiert wird, dass das erste weibliche Formgebungsteil (1) so positioniert wird, dass es der männlichen Thermoformgebungseinheit (2b) zugewandt ist, wobei das zweite weibliche Formgebungsteil (1') in eine der männlichen Spritzgießeinheit (2c) zugewandte Position gelangt.

15. Verfahren nach Anspruch 12, **dadurch gekennzeichnet, dass** der weibliche Formgebungswerkzeughalter (14) zwischen der männlichen Thermoformgebungseinheit (2b) und der männlichen Spritzgießeinheit (2c) angeordnet ist;
wobei ein weibliches Formgebungsteil (16) umfassend zumindest einen Seitenbereich umfassend zumindest einen Formhohlraum (1a) und angeordnet in einer Öffnung (14a) im weiblichen Formgebungswerkzeughalter (14), so dass es sich um eine vertikale Achse drehen kann, ausgeführt ist, sich so zu drehen, dass der besagte Seitenbereich wechselweise besagter männlicher Thermoformgebungseinheit (2b) oder besagter männlicher Spritzgießeinheit (2c) zugewandt wird.

16. Verfahren nach Anspruch 15, **dadurch gekennzeichnet, dass** das weibliche Formgebungsteil (16) eine Mehrzahl von Seitenbereichen umfasst, von denen jeder mindestens einen Formhohlraum (1a) aufweist, so dass, wenn sich das weibliche Formgebungsteil dreht, jeder besagte Seitenbereich wechselweise besagter männlicher Thermoformgebungseinheit (2b) und besagter männlicher Spritzgießeinheit (2c) zugewendet wird.

17. Verfahren nach Anspruch 11, **dadurch gekennzeichnet, dass** in besagter zweiter Position, die eine Abzugsposition ist, der thermogeformte verzierte Folienabschnitt (6a) durch ein Abzugs- und Positioniermittel (25) vom weiblichen Formgebungsteil (23), welches ein weibliches Thermoformgebungsteil ist, abgezogen wird;
der abgezogene thermogeformte verzierte Folienabschnitt (6a) zu der zweiten Formgebungseinheit umfassend ein gesondertes weibliches Spritzgießteil (22) umfassend den Formhohlraum (1a) mit der Formwandung (1b) und dem männlichen Spritzgießteil (2c, 18) gebracht wird, wenn besagte zweite Formgebungseinheit in einer Ruheposition ist, wobei das weibliche Formgebungsteil (22) vom männlichen Spritzgießteil (2c, 18) beabstandet ist, so dass der thermogeformte verzierte Folienabschnitt (6a) auf einem Teil der Formwandung (1b) platziert wird;
und dadurch, dass die zweite Formgebungseinheit in besagte Formgebungsposition gebracht wird, in welcher eine Kunststoffschicht zwischen die Formungsoberfläche (18a) und die den thermogeformten verzierten Folienabschnitt tragende Formwandung (1b) gespritzt wird.

18. Verfahren nach Anspruch 17, **dadurch gekennzeichnet, dass** der thermogeformte verzierte Folienabschnitt (6a) durch Rotieren des weiblichen Thermoformgebungsteils (23) in besagte Auszugsposition gebracht wird.

## Revendications

1. Dispositif de moulage pour préparer des articles en résine décorés en surface comprenant
une première unité de moule pour réaliser une portion de feuille décorée (6a) à partir d'une feuille décorée (6), la première unité de moule étant une unité de thermoformage et de découpe qui comprend une partie de moule femelle (1, 1', 16, 23) fixée à un porte-outil femelle (11, 14, 24) et comprenant une portion de thermoformage (1c) entourée par une paroi de moulage (1b), et une unité de moule mâle de thermoformage (2, 2b, 3, 7, 15) comprenant une partie de moule mâle de thermoformage (2, 2b) fixée à un premier porte-outil de moule mâle (7, 15) ayant une surface de retenue (2a) faisant face à ladite paroi de moulage (1b),
une seconde unité de moule pour réaliser ledit article en résine décoré en surface (17) et comprenant une unité de moule mâle d'injection (2c, 13, 18) comprenant une partie de moule mâle d'injection (2c, 18) ayant une surface de façonnage (18a) qui est complémentaire à une paroi de moulage (1b) d'une cavité de moulage (1a),
un moyen d'injection de résine (10) pour injecter une couche de résine (12) entre la surface de façonnage de résine (18a) et la paroi de moulage (1b) portant la portion de feuille décorée (6a) lorsque le dispositif de moulage est dans une position de moulage, de sorte que la portion de feuille décorée (6a) se retrouve fusionnée avec la couche de résine (12) et qu'un article en résine décoré en surface (17) soit formé,
dans lequel l'unité mâle de thermoformage comprend un dispositif de coeur (5) intégré dans la partie de moule mâle de thermoformage (2, 2b) et une plaque de motif (3) comprenant une première portion de surface (3a) façonnée de façon complémentaire à ladite surface de retenue (2a), une seconde portion de surface s'ajustant à ladite paroi de moulage (1b), et une ouverture (3c),
**caractérisé en ce que**
le dispositif de coeur (5) comprend au moins un insert de coeur décalable (4) avec une surface de poussée externe (4a) qui est une partie de ladite surface de retenue (2a),
l'unité mâle de thermoformage comprend en outre un moyen de décalage (9) pour décaler l'insert de coeur (4) vers et en éloignement de la partie de moule femelle (1, 1', 16) entre une première position où ladite surface de poussée (4a) est alignée avec ladite surface de retenue (2a) et une seconde position où la surface de poussée (4a) est poussée vers la portion de thermoformage (1c),
l'ouverture (3c) dans la plaque de motif (3) est appropriée pour le passage d'au moins une portion dudit insert de coeur (4), et
la plaque de motif (3) est mobile entre ladite partie de moule femelle (1, 1', 16, 23) et ladite partie de moule mâle de thermoformage (2, 2b) de sorte que, lorsque la première portion de surface (3a) est en contact avec la surface de retenue (2a), lorsque la seconde portion de surface (3b) est en contact avec ladite paroi de moulage (1b) et lorsque l'insert de coeur (4) est décalé vers la partie de moule femelle (1, 1', 16, 23), la feuille décorée (6) soit étirée sur ladite surface de poussée (4a) et qu'une portion de feuille décorée correspondante (6a) soit poussée à travers ladite ouverture (3a) vers ladite portion de paroi de moulage (1c) et découpée par une portion d'arête tranchante périphérique (4b) de ladite surface de poussée (4a), pressée contre la portion de thermoformage (1c), thermoformée et maintenue sur celle-ci ; et
le porte-outil femelle (11, 14, 24) est déplaçable pour placer la partie de moule femelle (1, 1', 16, 23) de façon alternative dans la position de thermoformage faisant face à la partie de moule mâle de thermoformage (2, 2b, 3) pour réaliser la portion de feuille décorée thermoformée (6a), et dans une position alternative où la partie de moule femelle (1, 1', 16, 23) ne fait pas face à la partie de moule mâle de thermoformage (2, 2b, 3), de sorte que, lorsqu'elle est positionnée dans ladite position de thermoformage, la partie de moule femelle (1, 1', 16, 23) et la partie de moule mâle de thermoformage (2, 2b, 3) soient positionnables depuis et vers une position ouverte où la partie de moule femelle (1, 1' , 16, 23) est à distance de la partie de moule mâle de thermoformage (2, 2b, 3) et une position de thermoformage où la partie de moule femelle (1, 1', 16, 23) se referme contre la partie de moule mâle de thermoformage (2, 2b, 3).

2. Dispositif de moulage selon la revendication 1, **caractérisé en ce que**
ladite position alternative est une position de repos dans laquelle la partie de moule femelle (1, 1', 16) portant la partie de feuille décorée thermoformée (6a) fait face à la partie de moule mâle d'injection (2c, 18) pour réaliser ledit article en résine décoré en surface (17) ;
ladite partie de moule femelle (1, 1', 16) comprend la cavité de moulage (1a) avec la paroi de moulage (1b) ;
la seconde portion de surface (1b) de la plaque de motif (3) est façonnée de façon complémentaire à la paroi de moulage (1b) ;
la portion de thermoformage (1c) est une portion de paroi de moulage (1c) de la paroi de moulage (1b) ;
la partie de moule femelle (1, 1', 16) et la partie de moule mâle d'injection (2c, 18) sont positionnables depuis et vers une position de repos où la partie de moule mâle d'injection (2c, 18) est à distance de la partie de moule femelle (1, 1', 16) et une position de moulage où la surface de façonnage (18a) est proche de ladite paroi de moulage (1b) ;
la seconde portion de surface (3b) de la plaque de motif (3) est façonnée de façon complémentaire à ladite paroi de moulage (1b) de sorte que la seconde portion de surface (3b) s'ajuste avec ladite paroi de moulage (1b).

3. Dispositif de moulage selon la revendication 2, **caractérisé en ce que** le porte-outil femelle (11) est déplaçable de façon linéaire par un moyen de déplacement depuis l'unité de moule mâle de thermoformage (2b) à l'unité de moule mâle d'injection (2c) le long d'une plaque-support de guidage (10) faisant face aux unités de moule mâle (2b, 2c).

4. Dispositif de moulage selon la revendication 2, **caractérisé en ce que** la partie de moule femelle comprend une première partie de moule femelle (1) et une seconde partie de moule femelle (1') fixées au porte-outil femelle (11) de sorte que, lorsque la première partie de moule femelle (1) est positionnée par le moyen de déplacement pour faire face à la première unité de moule mâle (2b), la seconde partie de moule femelle (1') soit positionnée de façon à faire face à la seconde unité de moule mâle (2c), et **en ce que** le porte-outil femelle (11) est rotatif par le moyen de déplacement autour d'un axe horizontal le long d'un angle de 180°.

5. Dispositif de moulage selon la revendication 4, **caractérisé en ce que** le porte-outil femelle (11) est raccordé à une plaque-support rotative (20).

6. Dispositif de moulage selon la revendication 4, **caractérisé en ce que** le porte-outil femelle (11) est raccordé rotativement à une plaque-support fixe (21).

7. Dispositif de moulage selon la revendication 2, **caractérisé en ce que**
la première unité de moule mâle (2b) est fixée à un premier porte-outil de moule mâle (15) et la seconde unité de moule mâle (2c) est fixée à un second porte-outil de moule mâle (13) ;
le porte-outil de moule femelle (14) est situé entre la première et la seconde unité de moule mâle (2b, 2c) ;
la partie de moule femelle (16) comprend au moins une portion latérale comprenant au moins une cavité de moulage (1a), et est positionnée de façon tournante dans une ouverture (14a) dans le porte-outil de moule femelle (14) de sorte qu'elle puisse tourner autour d'un axe vertical de sorte que, lorsque la partie de moule femelle tourne, ladite portion latérale soit positionnée de façon alternative pour faire face à ladite première unité de moule mâle (2b) et à ladite seconde unité de moule mâle (2c).

8. Dispositif de moulage selon la revendication 7, **caractérisé en ce que** la partie de moule femelle (16) comprend une pluralité de portions latérales comprenant chacune au moins une cavité de moulage (1a) de sorte que, lorsque la partie de moule femelle tourne, chaque dite portion latérale soit positionnée de façon alternative pour faire face à ladite première unité de moule mâle (2b) ou à ladite seconde unité de moule mâle (2c).

9. Dispositif de moulage selon la revendication 1, **caractérisé en ce que**
la partie de moule femelle (23) est une partie de moule femelle de thermoformage ;
elle comprend une partie de moule femelle d'injection séparée (22) comprenant la cavité de moulage (1a) avec la paroi de moulage (1b) ;
ladite position alternative est une position d'extraction dans laquelle la portion de feuille décorée thermoformée (6a) est extraite de la partie de moule femelle d'injection (22) par un moyen d'extraction et de positionnement (25) ;
la partie de moule femelle d'injection séparée (22) est comprise dans la seconde unité de moule pour réaliser ledit article de résine décoré en surface (17) ;
le moyen d'extraction et de positionnement (25) est conçu pour positionner la portion de feuille décorée thermoformée (6a) extraite de la partie de moule femelle de thermoformage (24) sur une partie de la paroi de moulage (1b) de la partie de moule femelle d'injection séparée (22) où elle fait face à la partie de moule mâle d'injection (2c, 18) pour réaliser ledit article en résine décoré en surface (17).

10. Dispositif de moulage selon la revendication 9, **caractérisé en ce que** le porte-outil femelle (24) est rotatif.

11. Procédé de préparation d'articles en résine décorés en surface dans un dispositif de moulage, le procédé comprenant
la réalisation d'une portion de feuille décorée (6a) à partir d'une feuille décorée (6) dans une première unité de moule,
la réalisation dudit article en résine décoré en surface (17) dans une seconde unité de moule comprenant une unité de moule mâle d'injection (2c, 13, 18) comprenant une partie de moule mâle d'injection (2c, 18) ayant une surface de façonnage (18a) qui est complémentaire à une paroi de moulage (1b) d'une cavité de moulage (1a),
l'injection d'une couche de résine (12) en utilisant un moyen d'injection de résine (10) entre la surface de façonnage (18a) et la paroi de moulage (1b) portant la portion de feuille décorée (6a) lorsque la seconde unité de moule est dans une position de moulage, de sorte que la portion de feuille décorée (6a) se retrouve fusionnée avec la couche de résine (12) et qu'un article en résine décoré en surface (17) soit formé,
l'extraction de l'article en résine décoré en surface (17) du dispositif de moulage,
la portion de feuille décorée (6a) étant découpée et thermoformée dans la première unité de moule qui est une unité de thermoformage et de découpe, par
le placement de la feuille décorée (6) entre une surface de retenue (2a) d'une unité de moule mâle de thermoformage (2, 2b, 3, 7, 15) et une plaque de motif (3) positionnée entre une portion de thermoformage (1c) d'une partie de moule femelle (1, 1', 16, 23) et l'unité de moule mâle de thermoformage (2, 2b, 3, 7, 15),
la portion de moule femelle (1, 1', 16, 23) étant fixée à un porte-outil femelle (11, 14, 24) et comprenant une paroi de moulage (1b) entourant la portion de thermoformage (1c) et faisant face à la surface de retenue (2a),
l'unité de moule mâle de thermoformage (2, 2b, 3, 7, 15) comprenant une partie de moule mâle de thermoformage (2, 2b) fixée à un premier porte-outil de moule mâle (7, 15), et un dispositif de coeur (5) intégré dans la partie de moule mâle de thermoformage (2, 2b),
la plaque de motif (3) comprenant une première portion de surface (3a) façonnée de façon complémentaire à ladite surface de retenue (2a), une seconde portion de surface (3b) s'ajustant avec ladite surface interne (1b), et une ouverture (3c),
le procédé étant **caractérisé par** les étapes de :
fermeture de la première unité de moule de sorte que la feuille décorée se retrouve immobilisée entre la surface de retenue (2a) et la première portion de surface (3a) de la plaque de motif (3) qui est mobile entre ladite partie de moule femelle (1, 1', 16, 23) et ladite partie de moule mâle de thermoformage (2, 2b), et que la plaque de motif (3) se retrouve maintenue entre la surface de retenue (2a) et ladite paroi de moulage (1b) de la partie de moule femelle (1, 1', 16, 23) ;
décalage, en utilisant un moyen de décalage (9), d'un insert de coeur décalable (4) qui a une surface de poussée (4a) qui fait partie de ladite surface de retenue (2a) du dispositif de coeur (5), depuis une première position où ladite surface de poussée (4a) est alignée avec ladite surface de retenue (2a), à travers ladite ouverture (3c) qui est appropriée pour le passage d'au moins une portion dudit insert de coeur (4), à la partie de moule femelle (1, 1', 16, 23), vers une seconde position où ladite surface de poussée (4a) dépasse de la surface de retenue (2a) et est pressée vers la portion de thermoformage (1c) de ladite paroi de moulage (1b), moyennant quoi la feuille décorée (6) est étirée sur la surface de poussée (4a) et est tirée à travers ladite ouverture (3c), de sorte que la portion de feuille décorée (6a) soit découpée par une arête tranchante périphérique (4b) de l'insert de coeur (4) et pressée par la surface de poussée (4a) contre la portion de thermoformage (1c) de la paroi de moulage (1b), thermoformée et maintenue sur celle-ci ;
exposition de la portion de feuille décorée (6a) au thermoformage ;
retour de l'insert de coeur (4) à ladite première position de sorte que la portion de feuille décorée thermoformée (6a) reste maintenue sur la portion de thermoformage (1b) ;
ouverture de la première unité de moule de sorte que la partie de moule femelle (1, 1', 16, 23) se retrouve à distance de la partie de moule mâle de thermoformage (2, 2b, 3) ;
déplacement du porte-outil femelle (11, 14) par le moyen de déplacement de sorte que la partie de moule femelle (1, 1', 16, 23) se retrouve placée dans une position alternative où la partie de moule femelle (1, 1' , 16, 23) ne fait pas face à la partie de moule mâle de thermoformage (2, 2b, 3) .

12. Procédé selon la revendication 11, **caractérisé en ce que**
ladite position alternative est une position de repos dans laquelle la partie de moule femelle (1, 1', 16) portant la portion de feuille décorée thermoformée (6a) fait face à la partie de moule mâle d'injection (2c, 18) pour réaliser ledit article en résine décoré en surface (17) dans la seconde unité de moule ;
ladite partie de moule femelle (1, 1', 16) comprend la cavité de moulage (1a) avec la paroi de moulage (1b) ;
la portion de thermoformage (1c) est une portion de paroi de moulage (1c) de la paroi de moulage (1b) ;
la seconde portion de surface (3b) de la plaque de motif (3) est façonnée de façon complémentaire à ladite paroi de moulage (1b) de sorte que la seconde portion de surface (3b) s'ajuste avec ladite paroi de moulage (1b) ;
et **en ce que**, après que la partie de moule femelle (1, 1', 16) portant la portion de feuille décorée thermoformée (6a) a été amenée à faire face à la partie de moule mâle d'injection (2c, 18), la seconde unité de moule est amenée à ladite position de moulage dans laquelle une couche de résine est injectée entre la surface de façonnage (18a) et la paroi de moulage (1b) portant la portion de feuille décorée thermoformée (6a).

13. Procédé selon la revendication 12, **caractérisé en ce que** la partie de moule femelle (1) est amenée à ladite position de repos au moyen d'un porte-outil femelle (11) qui est déplaçable de façon linéaire de l'unité de moule mâle de thermoformage (2b) à l'unité de moule mâle d'injection (2c) le long d'une plaque-support de guidage (10) faisant face aux unités de moule mâle (2b, 2c).

14. Procédé selon la revendication 12, **caractérisé en ce**
**qu'**une première partie de moule femelle (1) et une seconde partie de moule femelle (1') sont utilisées, les parties de moule femelle (1, 1') étant fixées côte à côte à un porte-outil femelle (11) qui est rotatif le long d'un angle de 180° ;
le porte-outil femelle (11) est mis en rotation de telle sorte que, lorsque la première partie de moule femelle (1) est positionnée pour faire face à l'unité de moule mâle de thermoformage (2b), la seconde partie de moule femelle (1') se retrouve positionnée de façon à faire face à l'unité de moule mâle d'injection (2c).

15. Procédé selon la revendication 12, **caractérisé en ce que**
le porte-outil de moule femelle (14) est situé entre l'unité de moule mâle de thermoformage (2b) et l'unité de moule mâle d'injection (2c) ;
une partie de moule femelle (16) comprenant au moins une portion latérale comprenant au moins une cavité de moulage (1a) et positionnée dans une ouverture (14a) dans le porte-outil de moule femelle (14), de sorte qu'elle puisse tourner autour d'un axe vertical, est amenée à tourner de sorte que ladite portion latérale se retrouve positionnée de façon alternative pour faire face à ladite unité de moule mâle de thermoformage (2b) ou à ladite unité de moule mâle d'injection (2c).

16. Procédé selon la revendication 15, **caractérisé en ce que** la partie de moule femelle (16) comprend une pluralité de portions latérales comprenant chacune au moins une cavité de moulage (1a) de sorte que, lorsque la partie de moule femelle tourne, chaque dite portion latérale se retrouve positionnée de façon alternative pour faire face à ladite unité de moule mâle de thermoformage (2b) et à ladite unité de moule mâle d'injection (2c).

17. Procédé selon la revendication 11, **caractérisé en ce que**
dans ladite seconde position qui est une position d'extraction, la portion de feuille décorée thermoformée (6a) est extraite par un moyen d'extraction et de positionnement (25) de la partie de moule femelle (23) qui est une partie de moule femelle de thermoformage ;
la portion de feuille décorée thermoformée extraite (6a) est transférée à la seconde unité de moule comprenant une partie de moule femelle d'injection séparée (22) comprenant la cavité de moulage (1a) avec la paroi de moulage (1b) et la partie de moule mâle d'injection (2c, 18), lorsque ladite seconde unité de moule est dans une position de repos où la partie de moule femelle d'injection (22) est à distance de la partie de moule mâle d'injection (2c, 18), de sorte que la portion de feuille décorée thermoformée (6a) soit placée sur une partie de la paroi de moulage (1b) ;
et **en ce que** la seconde unité de moule est amenée à ladite position de moulage dans laquelle une couche de résine est injectée entre la surface de façonnage (18a) et la paroi de moulage (1b) portant la portion de feuille décorée thermoformée (6a).

18. Procédé selon la revendication 17, **caractérisé en ce que** la portion de feuille décorée thermoformée (6a) est amenée dans ladite position d'extraction en mettant en rotation la partie de moule femelle de thermoformage (23).
